# EUROPEAN PATENT APPLICATION

(11) **EP 3 249 511 A1**
(43) Date of publication of application: **29.11.2017**
(21) Application number: 17172519.5
(22) Date of filing: 23.05.2017
(51) Int. Cl.: G06F 3/0485, G06F 3/0488, G06F 3/0482, H04N 1/00

(54) **DISPLAY DEVICE AND DISPLAY CONTROL PROGRAM**

(30) Priority: 26.05.2016 JP 2016105525; 26.05.2016 JP 2016105526; 26.05.2016 JP 2016105527
(71) Applicant: Kyocera Document Solutions Inc., Osaka-shi, Osaka 540-8585 (JP)
(72) Inventor: FUJIMOTO, Norie, Osaka-shi, Osaka, 540-8585 (JP); MIYAMOTO, Takanori, Osaka-shi, Osaka, 540-8585 (JP); HANADA, Naoto, Osaka-shi, Osaka, 540-8585 (JP); DANDOKO, Takushi, Osaka-shi, Osaka, 540-8585 (JP)
(74) Representative: BRP Renaud & Partner mbB Rechtsanwälte Patentanwälte Steuerberater

(57) **Abstract**

A display device includes a display section (473, 10A), a gesture acceptance section (101, 102A), and a display control section (103, 103A). When the image to be displayed is a scroll image displayable by scrolling on the display section (473, 10A), the display control section (103, 103A) allows the display section (473, 10A) to display, on a display area of the display section (473, 10A), a predetermined portion of the scroll image as a range displayable within the display area.

## Description

### BACKGROUND

The present invention relates to display devices and display control programs and particularly relates to a technique for providing a scrolling display of an image displayed on a display section.

Some display devices provide a scrolling display of a display screen of their display section according to a touch gesture made on the display screen by a user. Such a scrolling display performed according to a touch gesture, such as a swipe, is intuitive and user-friendly. Furthermore, the scrolling display enables the display of a scroll bar to be eliminated or reduced, which offers the advantage of enabling the expansion of an image display area of the display section.

However, if the scroll bar is absent or small, the user may be unaware of the scrollability of the display screen, i.e., the presence of any further image not being displayed within the display area of the display section but to be displayed. For example, an image forming apparatus sometimes displays a list of a plurality of pieces of job information presented in a predetermined order. The pieces of job information are displayed as a list in which a plurality of job names or the like are presented in order of acceptance time. However, if the scroll bar is absent or small, the user may be unaware of any piece of job information not being displayed within but hidden out of the display area.

To cope with this, there is proposed a display device that, when displaying a scrollable image on the display section, first scrolls up the image until its end position is displayed.

### SUMMARY

A technique improved over the aforementioned technique is proposed as one aspect of the present invention.

A display device according to an aspect of the present invention includes a display section (473, 10A), a gesture acceptance section (101, 102A), and a display control section (103, 103A). The display section (473, 10A) is capable of displaying an image. The gesture acceptance section (101, 102A) accepts a user's gesture. The display control section (103, 103A) performs a display control of the display section (473, 10A) and allows the display section (473, 10A), when the gesture acceptance section (101, 102A) accepts a user's instruction to provide a scrolling display of display contents of the display section (473, 10A), to provide a scrolling display of the display contents of the display section (473, 10A) in accordance with the instruction. Furthermore, when the image to be displayed is a scroll image displayable by scrolling on the display section (473, 10A), the display control section (103, 103A) allows the display section (473, 10A) to display, on a display area of the display section (473, 10A), a predetermined portion of the scroll image as a range displayable within the display area.

A display control program according to another aspect of the present invention allows a computer to function as: a gesture acceptance section (101) that accepts a user's gesture; and a display control section (103) that controls operation of a display section (473) and allows the display section (473), when the gesture acceptance section (101) accepts a user's instruction to provide a scrolling display of display contents of the display section (473), to provide a scrolling display of the display contents of the display section (473) in accordance with the instruction. Furthermore, when the image to be displayed is a scroll image displayable by scrolling on the display section (473), the display control program further allows the computer to function so that the display control section (103) allows the display section (473) to first display, on a display area of the display section (473), a predetermined portion of the scroll image as a range displayable within the display area, then provide a scrolling display of the scroll image by a predetermined amount in both directions or a single direction in which the scrolling display is possible, then return to a state where the predetermined portion of the scroll image is displayed on the display area, and stop the scrolling display.

A display control program according to still another aspect of the present invention allows a computer to function as: a gesture acceptance section (101) that accepts a user's gesture; and a display control section (103) that controls operation of a display section (473) and allows the display section (473), when the gesture acceptance section (101) accepts a user's instruction to provide a scrolling display of display contents of the display section (473), to provide a scrolling display of the display contents of the display section (473) in accordance with the instruction. Furthermore, when the image to be displayed is a scroll image displayable by scrolling on the display section (473), the display control program further allows the computer to function so that the display control section (103) allows the display section (473) to first display a full picture representing a whole area of the scroll image and then display a predetermined portion of the scroll image as a range displayable within a display area of the display section (473).

A display control program according to still another aspect of the present invention allows a computer to function as: a gesture acceptance section (102A) that accepts a user's gesture; and a display control section (103A) that controls operation of a display section (10A) and allows the display section (10A), when the gesture acceptance section (102A) accepts a user's instruction to provide a scrolling display of display contents of the display section (10A), to provide a scrolling display of the display contents of the display section (10A) in accordance with the instruction. Furthermore, when the image to be displayed is a scroll image displayable by scrolling on the display section (10A), the display control program further allows the computer to function so that the display control section (103A) allows the display section (10A) to first display a central portion of the scroll image on a display area of the display section (10A), then provide a scrolling display of the scroll image until a portion of the scroll image containing a predetermined default display position forming a corner of the scroll image is displayed on the display area, and stop the scrolling display in a state where the portion of the scroll image containing the default display position is displayed on the display area.

### BRIEF DESCRIPTION OF THE DRAWINGS

FIG. 1 is a functional block diagram schematically showing an essential internal configuration of a display device according to a first embodiment of the present disclosure.
FIG. 2 is a flowchart showing processing during display control by an image forming apparatus according to the first embodiment.
FIG. 3 is a view showing an example of a display screen.
FIG. 4 is a view showing components of the display screen.
FIG. 5 is a view showing an example of a display screen.
FIGS. 6A, 6B, 6C, and 6D are explanatory views for illustrating a scrolling display.
FIG. 7 is a view showing an example of a display displayed on a display section.
FIG. 8 is a flowchart showing processing during display control by an image forming apparatus according to a second embodiment.
FIGS. 9A, 9B, 9C, and 9D are explanatory views for illustrating a scrolling display.
FIG. 10 is a flowchart showing processing during display control by an image forming apparatus according to a third embodiment.
FIG. 11 is a view showing an example of a display displayed on a display section.
FIG. 12 is a view showing an example of a display displayed on the display section.
FIG. 13 is an explanatory view for illustrating an animation display in which a top portion of a scroll image is gradually enlarged.
FIG. 14 is a view showing an example of a display displayed on the display section.
FIG. 15 is a view showing an example of a display displayed on the display section.
FIG. 16 is a view showing an example of a display displayed on the display section.
FIG. 17 is a functional block diagram schematically showing an essential internal configuration of a display device according to a fourth embodiment of the present disclosure.
FIG. 18 is a view showing an example of a browser screen displayed on a display section of the display device according to the fourth embodiment.
FIG. 19A is a view showing a positional relation between a Web page and a display area and FIG. 19B is a view showing an example of a browser screen displayed on the display section.
FIG. 20 is a flowchart showing processing during display control by the display device according to the fourth embodiment.
FIG. 21A is a view showing an example of a browser screen displayed on the display section and FIG. 21B is a view showing a positional relation between a Web page and a display area.
FIG. 22 is a view showing the positional relation between the Web page and the display area.
FIG. 23 shows an example of a browser screen displayed on the display section, wherein FIG. 23A shows a state at the start of a scrolling display and FIG. 23B shows a state at the end of the scrolling display.
FIG. 24 is a flowchart showing processing during display control by a display device according to a fifth embodiment.
FIGS. 25A, 25B, and 25C are views showing a positional relation between a Web page and a display area.
FIGS. 26A, 26B, and 26C are views showing examples of a browser screen displayed on a display section.
FIG. 27 is a flowchart showing processing during display control by a display device according to a sixth embodiment.
FIG. 28 is a view showing a positional relation between a Web page and a display area and showing how a scrolling direction is divided into two directions.

### DETAILED DESCRIPTION

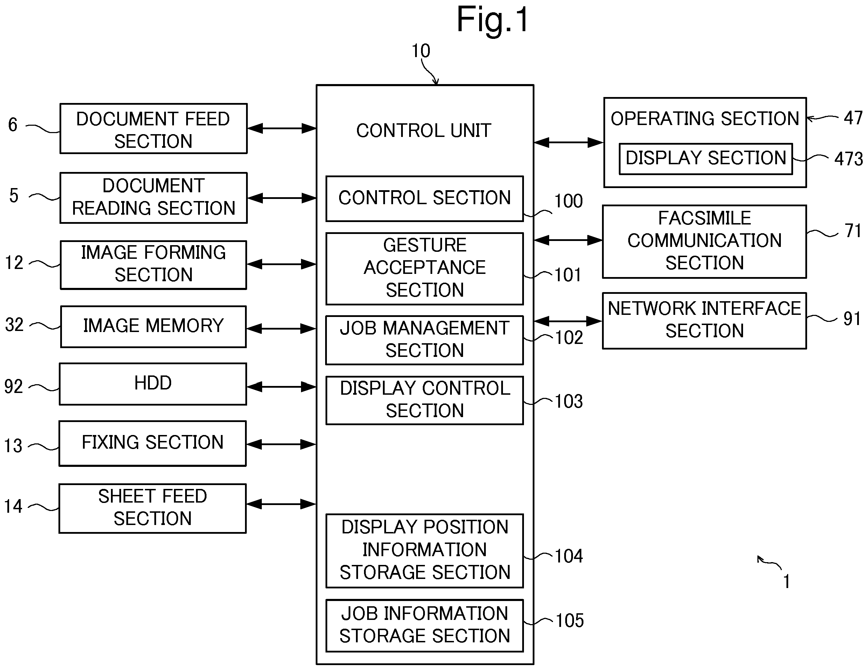

Hereinafter, a description will be given of a display device and a display control program, both according to one embodiment of the present invention, with reference to the drawings. Fig. 1 is a functional block diagram schematically showing an essential internal configuration of an image forming apparatus serving as a display device according to a first embodiment of the present invention.

A display device according to one embodiment of the present invention is, for example, an image forming apparatus. This image forming apparatus 1 is a multifunction peripheral having a plurality of functions including, for example, a copy function, a print function, a scan function, and a facsimile function and is made up by including a control unit 10, a document feed section 6, a document reading section 5, an image forming section 12, an image memory 32, an HDD (Hard Disk Drive) 92, a fixing section 13, a sheet feed section 14, an operating section 47, a facsimile communication section 71, and a network interface section 91.

The image forming section 12 forms on a sheet (recording medium) a toner image of an image to be printed.

The HDD 92 is a large storage device capable of storing document images and so on acquired by the document reading section 5 and stores a display control program according to one embodiment of the present invention.

The operating section 47 accepts operator's instructions for various types of operations and processing executable by the image forming apparatus 1, such as an instruction to perform an image forming operation and an instruction to perform a document reading operation. The operating section 47 includes a display section 473 that displays operation guidance and so on for the operator. The display section 473 has a touch panel function, detects through the touch panel operator's touch gestures on buttons and keys displayed on a screen, and outputs detection signals indicating the detected gestures to a gesture acceptance section 101 to be described hereinafter.

The control unit 10 is made up by including a processor, a RAM (Random Access Memory), a ROM (Read Only Memory), and a dedicated hardware circuit. The processor is, for example, a CPU (Central Processing Unit), an MPU or an ASIC. The control unit 10 includes a control section 100, a gesture acceptance section 101, a job management section 102, a display control section 103, a display position information storage section 104, and a job information storage section 105.

The control unit 10 functions as the control section 100, the gesture acceptance section 101, the job management section 102, the display control section 103, the display position information storage section 104, and the job information storage section 105 by operating in accordance with the display control program stored on the HDD 92. However, each of the above-mentioned control section 100 and other sections may not be implemented by the operation of the control unit 10 in accordance with the display control program but may be constituted by a hardware circuit. Hereinafter, the same applies to the other embodiments unless otherwise stated.

The display position information storage section 104 stores display position information indicating a predetermined portion of a scroll image recently displayed on a display area of the display section 473. Every time a predetermined portion of the scroll image is displayed on the display area of the display section 473, the control section 100 updates the display position information stored in the display position information storage section 104. The scroll image is an image that the display control section 103 allows the display section 473 to display as a target to be displayed by scrolling. In other words, the scroll image refers to an image the whole area of which cannot be displayed in a single display within the display area of the display section 473 and can be displayed on the display area only by scrolling display.

The job information storage section 105 stores job information on each job, including the job acceptance time, job type (such as photocopying, printing by printer, printing on fax receipt, fax sending or scanning and saving), job name, user name, status (such as queued, processing or completed), and so on.

The control section 100 governs the overall operation control of the image forming apparatus 1. The control section 100 is connected to the document feed section 6, the document reading section 5, the image forming section 12, the image memory 32, the HDD 92, the fixing section 13, the sheet feed section 14, the operating section 47, the facsimile communication section 71, and the network interface section 91 and controls the operations of these components.

The gesture acceptance section 101 identifies a user's gesture entered by a user, based on a detection signal output from the operating section 47 (such as a touch panel). Then, the gesture acceptance section 101 accepts an instruction indicated by the identified user's gesture and outputs a control signal corresponding to the instruction to the display control section 100 and so on.

The job management section 102 allows the job information storage section 105 to store job information indicating a created job and appropriately updates the job information stored in the job information storage section 105 according to a change of the situation of the job.

The display control section 103 performs the display control for the display section 473. For example, when the gesture acceptance section 101 accepts a user's instruction to scroll the display contents of the display section 473 based on a flick, swipe or like gesture through the touch panel function of the operating section 47, the display control section 103 allows the display section 473 to scroll the display in response to the user's request.

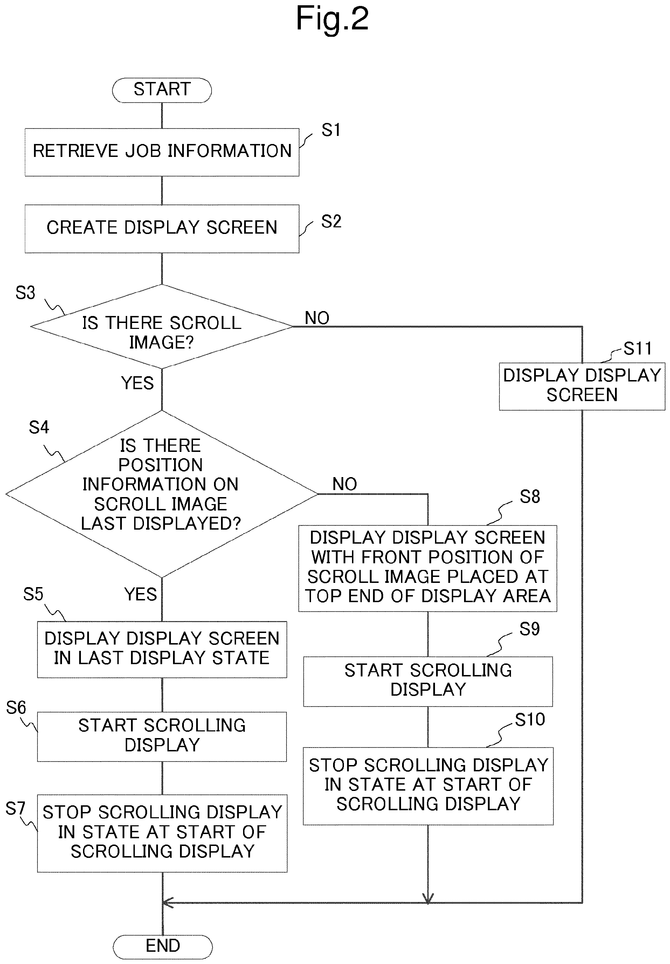

Next, a description will be given of operation of the image forming apparatus 1 having the above configuration. Fig. 2 is a flowchart showing processing during display control by the image forming apparatus 1.

For example, when the gesture acceptance section 101 accepts a user's request to display a job list, the control section 100 retrieves job information from the job information storage section 105 (S1l). The display control section 103 creates a display screen containing the job list based on the retrieved job information (S2).

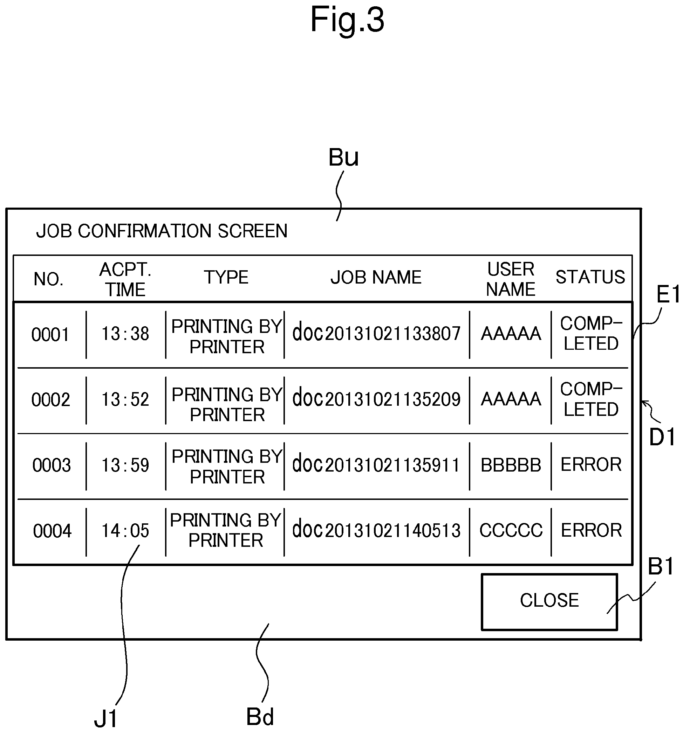

Fig. 3 is a view showing an example of a display screen containing a job list. The display screen D1 is made up by containing respective images representing: a job list J1 composed of a plurality of items (job number, job acceptance time, job type, job name, user name, and status) displayed on a display area E1; a top bar Bu where the title name "JOB CONFIRMATION SCREEN" and the names of the items are displayed; and a bottom bar Bd where a button B1 indicated "Close" is formed for closing the display screen D1.

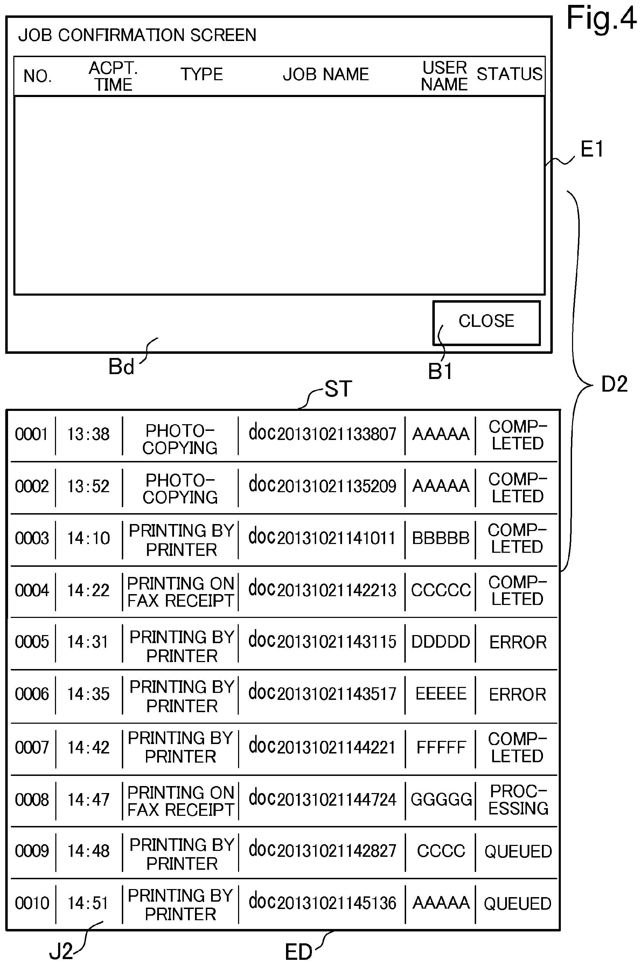

In this example, the overall job list J1 can be displayed within the display area E1 of the display section 473. In other words, the job list J1 is not a scroll image. Unlike this, if a job list contains many pieces of job information like a job list J2 shown in Fig. 4, the job list is beyond the display area of the display section 473 and it is impossible to display the overall job list within the display area E1. In other words, the job list J2 is a scroll image. The references "ST" and "ED" in the figure indicate the front position and end position, respectively, of the job list J2.

Subsequently, the display control section 103 determines whether or not the job list contained in the created display screen is a scroll image (S3). If determining that the display screen contains a scroll image (YES in S3), then the display control section 103 determines whether or not above-mentioned display position information on the scroll image (i.e., position information indicating which portion of the scroll image was last displayed on the display area E1 of the display section 473) is stored in the display position information storage section 104 (S4).

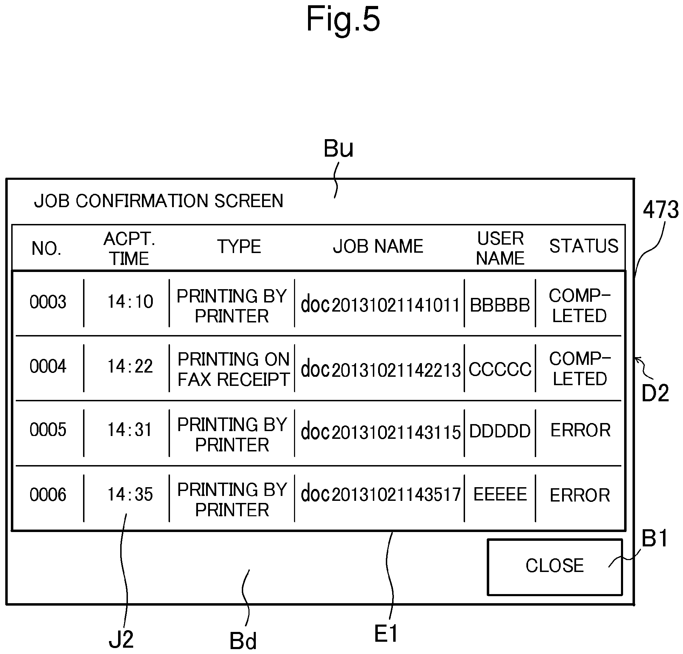

If determining that the display position information on the scroll image is stored in the display position information storage section 104 (YES in S4), the display control section 103 designates, based on the display position information stored in the display position information storage section 104, the last displayed portion of the job list J2 as an initial display portion serving as a predetermined portion to be displayed ahead of any other portion thereof on the display area E1 (S5). For example, if the last displayed portion in a previous display, indicated by the display position information on the job list J2, is pieces of job information having job numbers "0003" to "0006", a portion of the job list J2 composed of the pieces of job information from job number "0003" to "0006" is designated as the initial display portion as shown as an example in Fig. 5. The display control section 103 allows the display section 473 to display a display screen D2 which contains the designated initial display portion of the job list J2 placed on the display area E1, the top bar Bu, and the bottom bar Bd (S5). For example, if the last displayed job information in the previous display of the job list J2 is pieces of job information from job number "0003" to "0006", the display screen D2 as shown in Fig. 5 is displayed on the display section 473.

Thereafter, the display control section 103 starts a scrolling display of the job list J2, which is a scroll image, with the initial display portion as a starting position (S6) and finally stops the scrolling display in a state where the initial display portion is displayed on the display area E1 (S7).

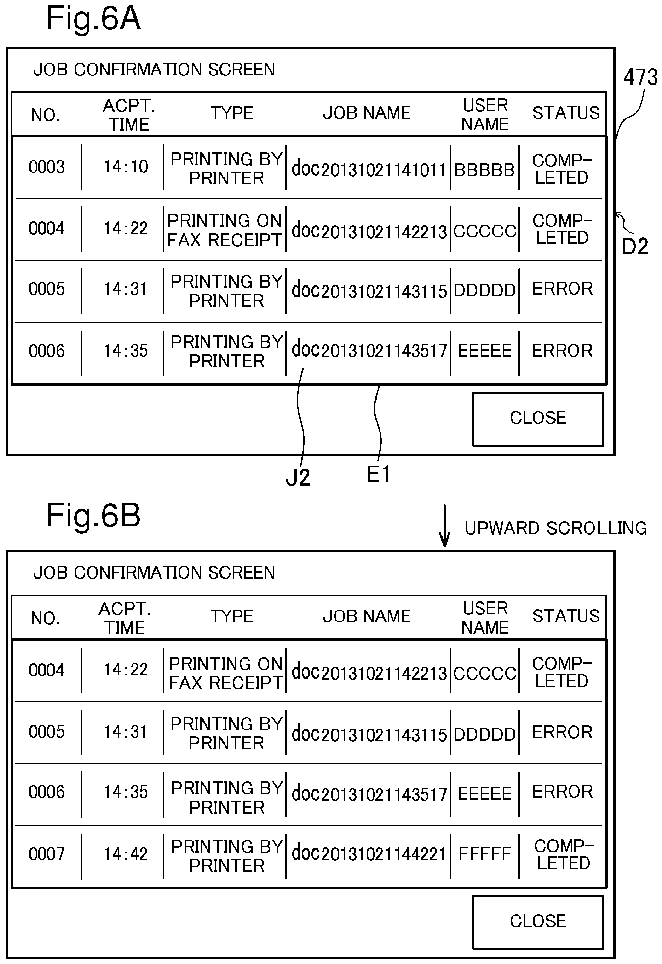

Figs. 6A to 6D are explanatory views for illustrating the scrolling display (S6). First, the display control section 103 allows the display section 473 to display the display screen D2 in which the initial display portion of the job list J2 is placed on the display area E1 (see Fig. 6 A).

In this state, the display control section 103 first scrolls up the job list J2 in order that pieces of job information indicated by a portion of the job list J2 hidden below the display area E1 are displayed, for example, by scrolling up the job list J2 a predetermined unit amount of movement U (e.g., one line of the job list J2) from the initial display portion as the starting position (see Fig. 6 B).

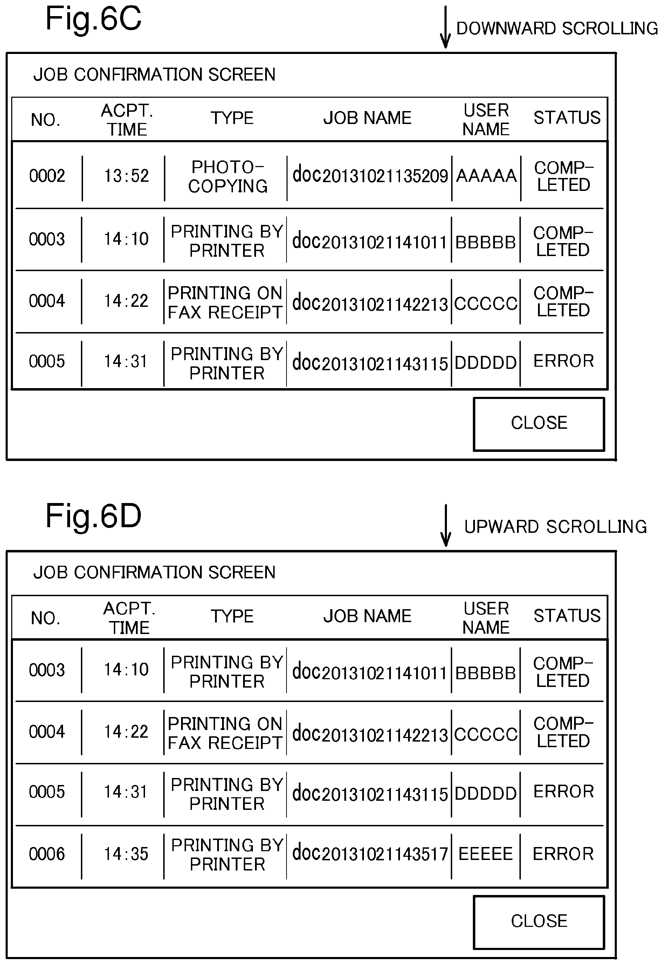

Following the above upward scrolling display, the display control section 103 switches the scrolling direction to scroll down the job list J2 in order that pieces of job information indicated by a portion of the job list J2 hidden above the display area E1 are displayed, for example, by scrolling down the job list J2 twice the unit amount of movement U (in other words, the amount of movement from the initial display portion as the starting position is a unit amount of movement U) (see Fig. 6 C).

Thereafter, the display control section 103 switches the scrolling direction again to scroll up the job list J2 and return it to a state where the initial display portion as the starting position is displayed on the display area E1 (see Fig. 6 D), and stops the scrolling in this state. To sum up, when the display control section 103 allows the display section 473 to display the job list J2, the job list J2 begins with the state where the initial display portion as the starting position is displayed on the display area E1, is then scrolled up and down, and stops in the initial state. Thus, the job list J2 can be seen by the user as if it shook up and down on the display section 473 and then stopped in a state where the predetermined portion was displayed.

Although the above description has been given of an example where the job list J2 is scrolled a predetermined unit amount of movement U, the display control section 103 may provide a scrolling display by scrolling the job list J2 up and down so that all remaining portions of the job list J2 other than the initial display portion as the starting position, which are not being displayed within but hidden out of the display area E1, can be displayed.

As described above, if at the time of display of the initial display portion as the starting position (S5) the front position ST of the job list J2 is not placed at the top end of the display area E1 and the end position ED of the job list J2 is not placed at the bottom end of the display area E1, the display control section 103 scrolls the job list J2 up and down. Unlike this, if at that time the front position ST of the job list J2 is placed at the top end of the display area E1, the display control section 103 merely scrolls up the job list J2. If at that time the end position ED of the job list J2 is placed at the bottom end of the display area E1, the display control section 103 merely scrolls down the job list J2.

For example, if at the start of a scrolling display the uppermost portion of the job list J2, e.g., a portion thereof indicating pieces of job information from job number "0001" to "0004", is displayed on the display area E1, this display state is designated as a starting position and the job list J2 is scrolled up in order to display the remaining portion thereof located below the starting position. On the other hand, if at the start of a scrolling display the lowermost portion of the job list J2, e.g., a portion thereof indicating pieces of job information from job number "0007" to "0010", is displayed on the display area E1, this display state is designated as a starting position and the job list J2 is scrolled down in order to display the remaining portion thereof located above the starting position.

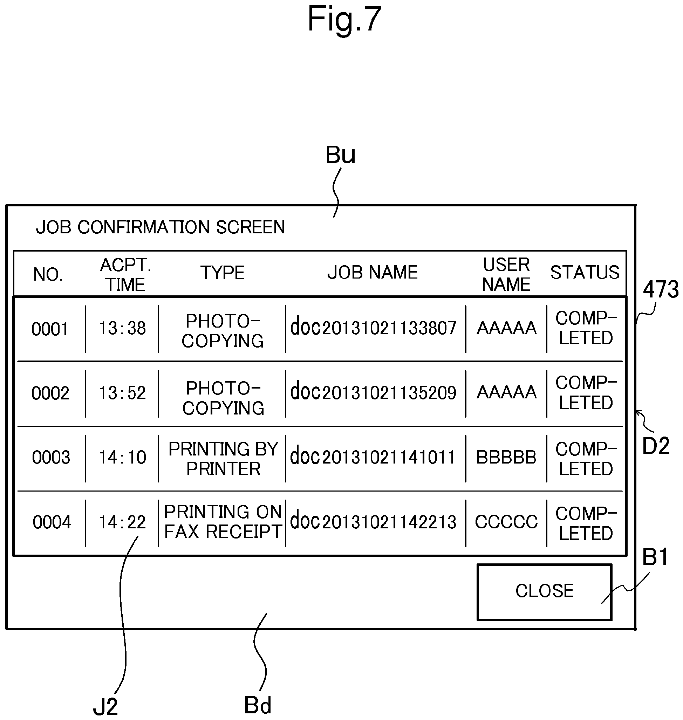

If in S4 the display control section 103 determines that no display position information on the scroll image contained in the display screen created by the control section 100 in S2 is stored in the display position information storage section 104 (NO in S4), the display control section 103 allows the display section 473 to display a display screen D2 made up by including: the job list J2 in which the front position ST thereof is placed at the top end of the display area E1; the top bar Bu; and the bottom bar Bd (S8), as shown in Fig. 7. Thus, even if the display position information on the job list J2 is not stored in the display position information storage section 104, a scrolling display of the job list J2 can be suitably provided on the display section 473.

Thereafter, the display control section 103 starts the scrolling display of the job list J2 (S9). After the scrolling display, the display control section 103 stops the scrolling display in the same state as when the scrolling display is started (a state where the display screen D2 is displayed on the display section 473) (S10). Specifically, the display control section 103 first provides an upward scrolling display of the job list J2 by scrolling up the job list J2 a predetermined unit amount of movement U from the front position ST of the job list J2 as the starting position, then switches the scrolling direction to provide a downward scrolling display of the job list J2, then returns the job list J2 to a state where the front position ST of the job list J2 as the starting position is displayed at the top end of the display area E1, and stops the scrolling display.

If in S3 the display control section 103 determines that the display screen created by the control section 100 in S2 contains no scroll image (NO in S3), the display control section 103 allows the display section 473 to display the display screen D1 (see Fig. 3) made up by including the job list J1, the top bar Bu, and the bottom bar Bd (S11).

In this relation, in a general display device, an image to be displayed is first scrolled up until its end position is displayed, resulting in a state where the bottom end of the scrollable image is displayed. Therefore, in order that the user confirms the contents of the image from a desired position thereof, such as the front position, and performs a desired operation, it is necessary to make an additional gesture for instructing to scroll down the image so that the front position of the image is displayed on a display screen of the display section, which makes it troublesome for the user to operate the display device.

In contrast, according to the first embodiment, in the case where the display contents of the display section 473 are scrolled by the display device having the display area E1, a scrolling display of the job list J2, which is a scroll image, is automatically provided. Therefore, even if the scroll bar is absent or small, the user can be made aware of the presence of the scroll image. Furthermore, since the scroll image is stopped in a state at the start of the scrolling display, no scroll gesture for returning the scroll image to an original position (for example, the front position) is needed, which can make the user aware of the presence of the scroll image without giving the user trouble.

Next, a description will be given of a display device (image forming apparatus 1) according to a second embodiment. In the first embodiment, in providing a scrolling display of the scroll image, the scroll image is scrolled a predetermined amount (unit amount of movement U) from the initial display portion as the starting position. The second embodiment is different from the first embodiment in that the amount of scrolling is set based on the amount of information indicated by portions of the scroll image hidden above and below the display area E1.

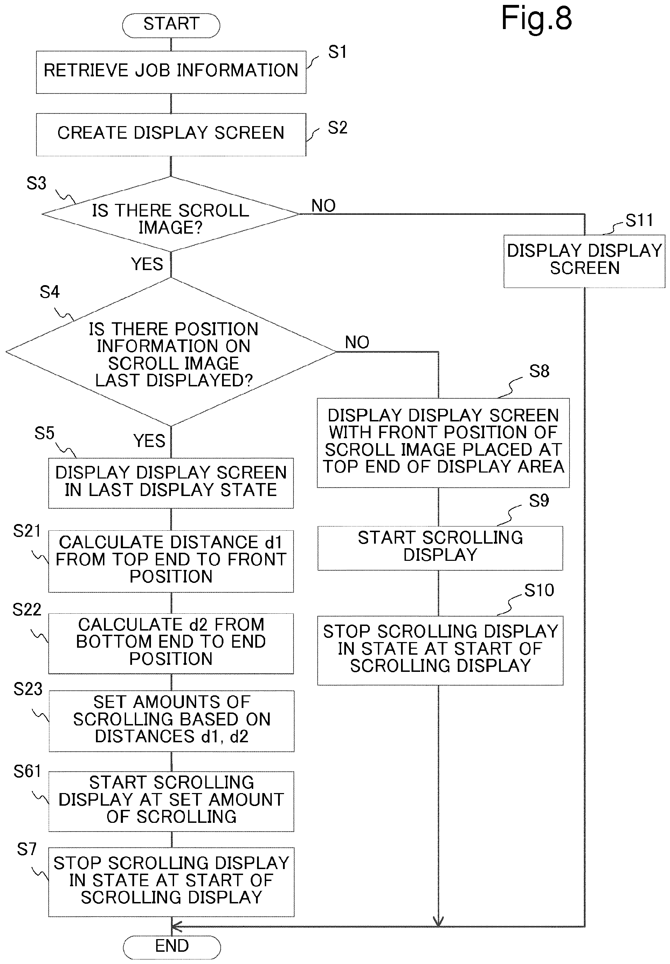

A description will be given below of operation of the display device (image forming apparatus 1) according to the second embodiment with reference to a flowchart shown in Fig. 8. Fig. 8 is a flowchart showing processing during display control by the image forming apparatus 1 according to the second embodiment. However, further explanation of the same steps of processing as those in the first embodiment will be omitted.

When in S5 the display control section 103 allows the display section 473 to display, based on the display position information stored in the display position information storage section 104, a display screen D2 containing a predetermined portion of the job list J2 as the initial display portion in a state when the job list J2 was last displayed as shown in Fig. 5, the display control section 103 in the second embodiment calculates the distance d1 from the top end of the portion of the job list J2 being displayed on the display area E1 to the front position ST (see Fig. 4) of the job list J2 and the distance d2 from the bottom end of the portion of the job list J2 being displayed on the display area E1 to the end position ED (see Fig. 4) of the job list J2 (S21, S22).

Next, the display control section 103 sets the amount of upward scrolling and amount of downward scrolling based on the calculated distances d1 and d2 (S23). Specifically, the amount of upward scrolling and amount of downward scrolling from the starting position are set based on the amount of information indicated by a portion of the job list J2 hidden above the display area E1 (pieces of job information from job number "0001" to "0002" in this case) and the amount of information indicated by a portion of the job list J2 hidden below the display area E1 (pieces of job information from job number "0007" to "0010" in this case) (S23).

For example, if the distance d1 and the distance d2 have the same length, the display control section 103 sets both the amounts of upward scroll and downward scroll at the predetermined unit amount of movement U (e.g., one line of the job list J2). If the distance d1 and the distance d2 have different lengths, the display control section 103 sets the amount of scrolling for the distance having a longer length at twice the unit amount of movement U and sets the amount of scrolling for the distance having a shorter length at the unit amount of movement U. As shown in Fig. 5, if as for the job list J2 pieces of job information from job number "0003" to "0006" are displayed on the display area E1, the distance d2 is longer than the distance d1. Therefore, the display control section 103 sets the amount of scrolling downward from the starting position at twice the unit amount of movement U (two lines of the job list J2) and sets the amount of upward scrolling at the unit amount of movement U (one line of the job list J2).

Then, the display control section 103 starts a scrolling display of the job list J2 at the above set amount of scrolling (S61) and, after the end of the scrolling display, returns the job list J2 to a state where the initial display portion is displayed on the display area E1, and stops the scrolling display (S7).

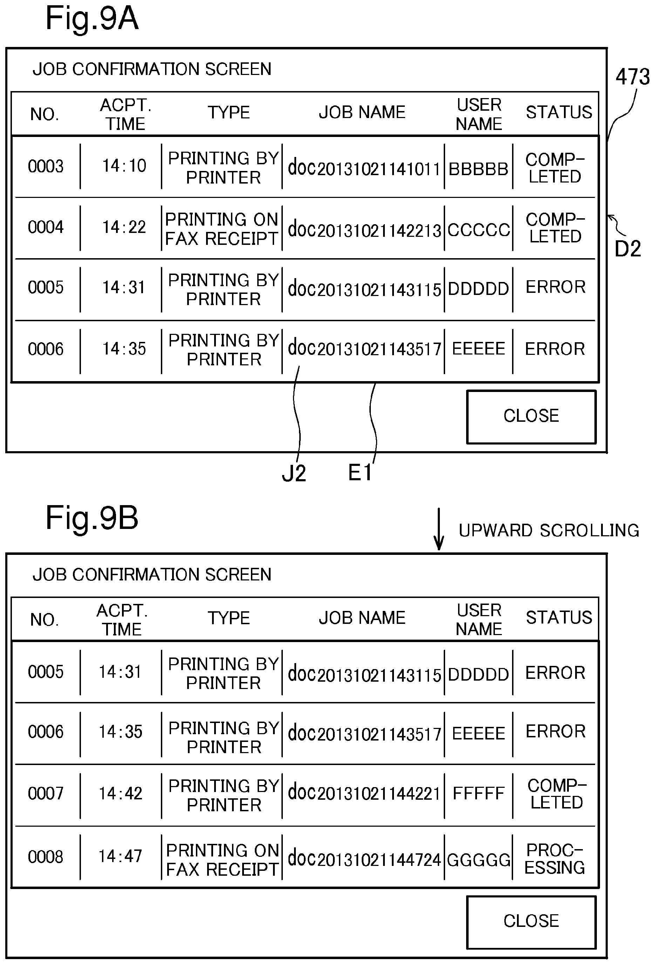

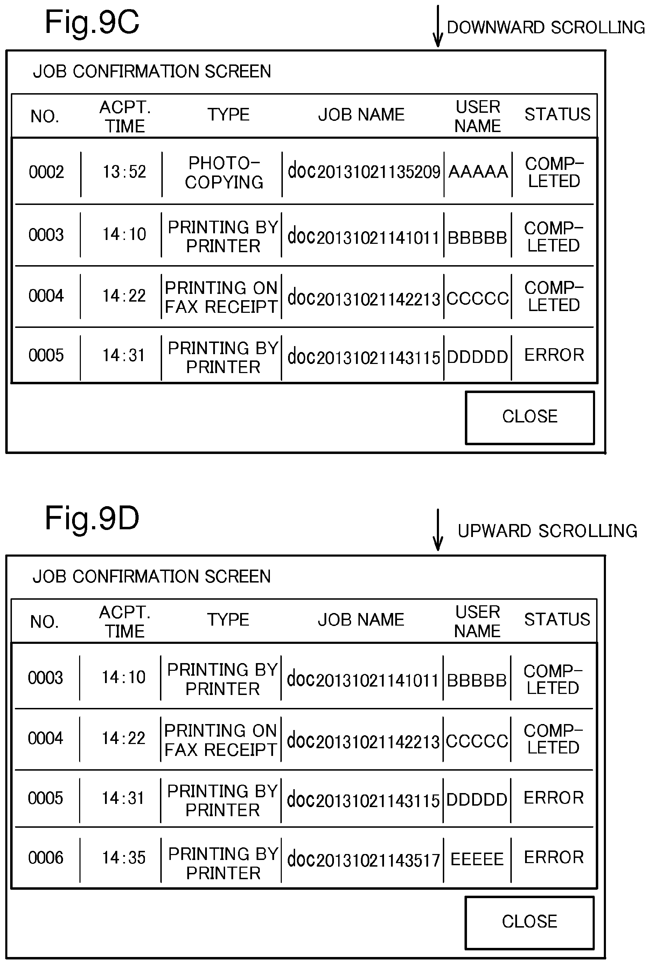

Figs. 9A to 9D are explanatory views for illustrating the scrolling display in the second embodiment. The display control section 103 first causes a predetermined portion of the job list J2 forming the initial display portion to be displayed on the display area E1 as shown in Fig. 9A. In this state, the display control section 103 scrolls up the job list J2 in order that pieces of job information indicated by a portion of the job list J2 hidden below the display area E1 are displayed. Then, at the point in time when the job list J2 is scrolled twice the unit amount of movement U (two lines of the job list J2) from the initial display portion as the starting position (see Fig. 9 B), the display control section 103 switches the scrolling direction to scroll down the job list J2 in order that pieces of job information indicated by a portion of the job list J2 hidden above the display area E1 are displayed. When the job list J2 is moved three times the unit amount of movement U (i.e., one unit amount of movement U from the starting position) (see Fig. 9 C), the display control section 103 switches the scrolling direction to scroll up the job list J2, returns the job list J2 to a state where the predetermined portion as the initial display portion of the job list J2 is displayed on the display area E1 (see Fig. 9 D), and stops the scrolling display. In this manner, while the job list J2 is scrolled to a greater extent from the state where a portion of the job list J2 forming the initial display portion is displayed on the display area E1 toward the side of the job list J2 containing a larger hidden portion thereof, it is scrolled to a smaller extent from the state where the initial display portion is displayed on the display area E1 toward the side of the job list J2 having a smaller hidden portion thereof. Therefore, according to the second embodiment, which side of the job list J2, above or below, contains a greater amount of information in a hidden portion can be determined from the above amounts of scrolling.

In S21 and S22, the display control section 103 may set the amount of upward scrolling and amount of downward scrolling in proportion to the values of the distance d2 and the distance d1, respectively.

Next, a description will be given of a display device (image forming apparatus 1) according to a third embodiment. The third embodiment is different from the first and second embodiments in that when the image to be displayed is a scroll image displayable by scrolling on the display section 473, the display control section 103 (the control unit) allows the display section 473 to first display a full picture representing the whole area of the scroll image and then display the predetermined portion of the scroll image as a range displayable within the display area E1 of the display section 473.

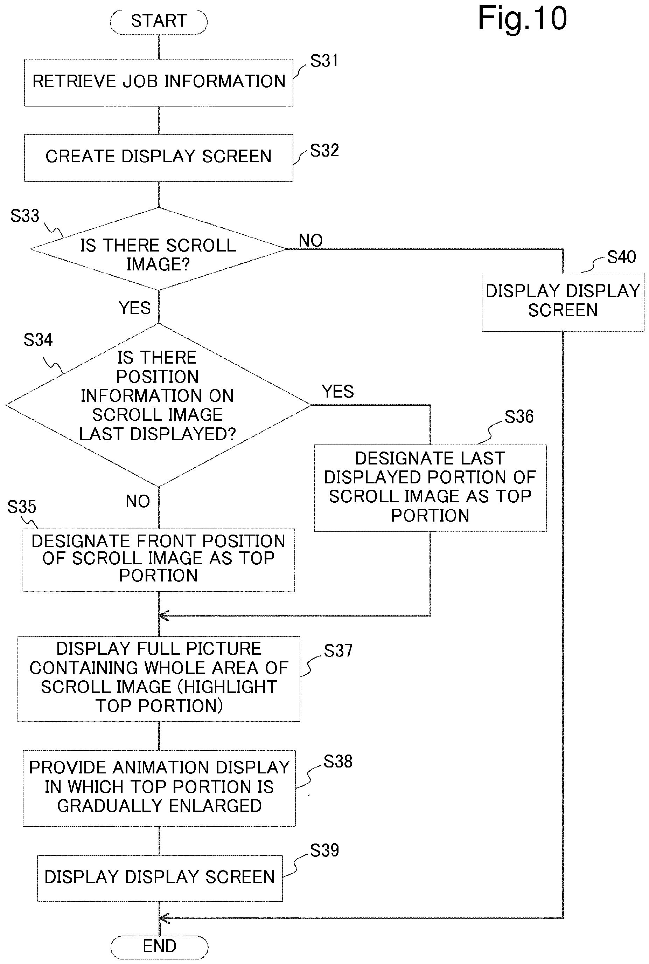

A description will be given below of operation of the display device (image forming apparatus 1) according to the third embodiment with reference to a flowchart shown in Fig. 10. Fig. 10 is a flowchart showing processing during display control by the image forming apparatus 1 according to the third embodiment.

For example, when the gesture acceptance section 101 accepts a user's request to display a job list, the control section 100 retrieves job information from the job information storage section 105 (S31). The display control section 103 creates a display screen containing the job list based on the retrieved job information (S32).

As shown in Fig. 3, the display screen D1 is made up by containing respective images representing: a job list J1 composed of a plurality of items (job number, job acceptance time, job type, job name, user name, and status) displayed on a display area E1; a top bar Bu where the title name "JOB CONFIRMATION SCREEN" and the names of the items are displayed; and a bottom bar Bd where a button B1 indicated "Close" is formed for closing the display screen D1.

In this example, the overall job list J1 can be displayed within the display area E1 of the display section 473 as described previously. In other words, the job list J1 is not a scroll image. Unlike this, if a job list contains many pieces of job information like the job list J2 shown in Fig. 4, the job list is beyond the display area of the display section 473 and it is impossible to display the overall job list within the display area E1. In other words, the job list J2 is a scroll image. The references "ST" and "ED" in the figure indicate the front position and end position, respectively, of the job list J2.

Subsequently, the display control section 103 determines whether or not the job list contained in the created display screen is a scroll image (S33). If determining that the display screen contains a scroll image (YES in S33), then the display control section 103 determines whether or not above-mentioned display position information on the scroll image (i.e., position information indicating which portion of the scroll image was last displayed on the display area E1 of the display section 473) is stored in the display position information storage section 104 (S34).

If the display control section 103 determines that no display position information on the scroll image is stored in the display position information storage section 104 (NO in S34), the display control section 103 designates, for example, the front portion of the job list J2 (see Fig. 4) which is the scroll image (the portion thereof indicating the pieces of job information from job number "0001" to "0004") as a top portion Jt serving as a predetermined portion to be displayed ahead of any other portion thereof on the display area E1 (see Fig. 4) (S35).

On the other hand, if determining that the display position information on the scroll image is stored in the display position information storage section 104 (YES in S34), the display control section 103 designates, based on the display position information stored in the display position information storage section 104, the last displayed portion of the job list J2 as the top portion Jt serving as the predetermined portion to be displayed ahead of any other portion thereof on the display area E1 (S36). For example, if the last displayed portion in a previous display, indicated by the display position information on the job list J2, is pieces of job information having job numbers "0005" to "0008", a portion of the job list J2 composed of the pieces of job information from job number "0005" to "0008" is designated as the top portion Jt.

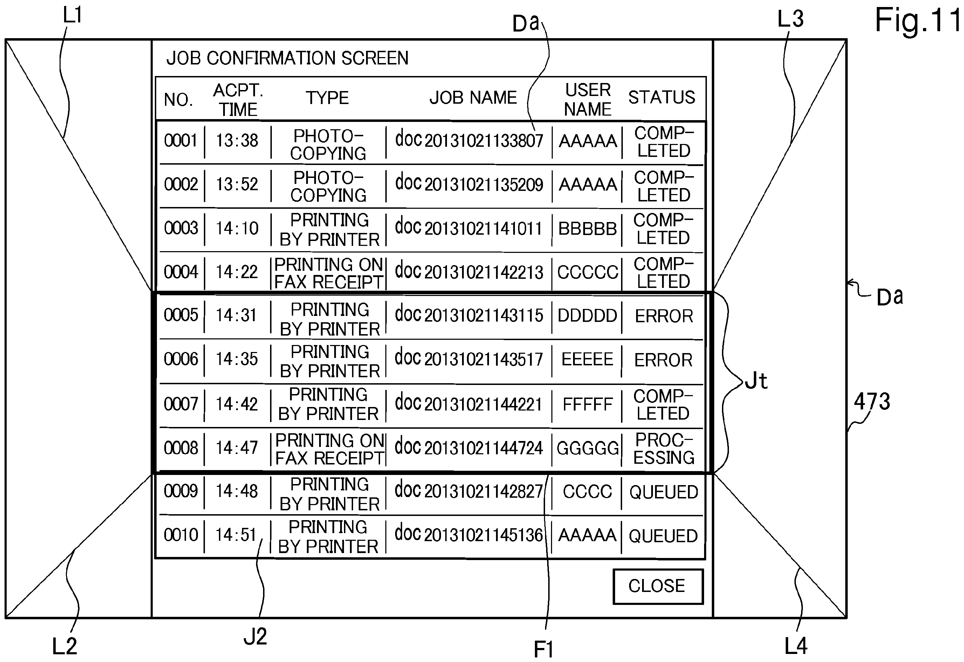

Then, as shown in Fig. 11, the display control section 103 allows the display section 473 to display a full picture Da containing the overall image of the job list J2 serving as a scroll image and highlight the top portion Jt, for example, by enclosing it by a thick frame F1 or radially extending line segments L1 to L4 from the four corners of the top portion Jt (S37).

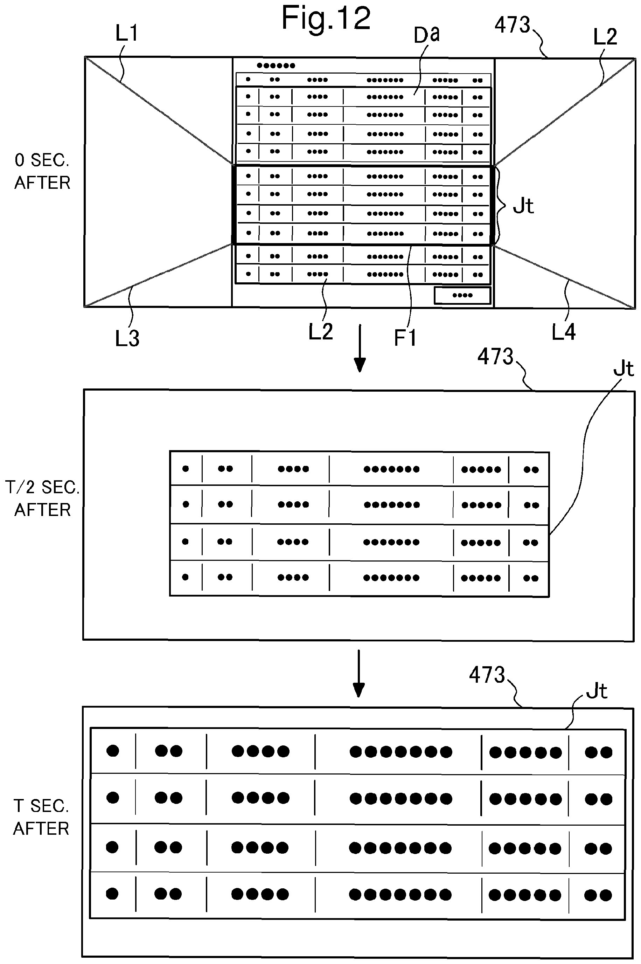

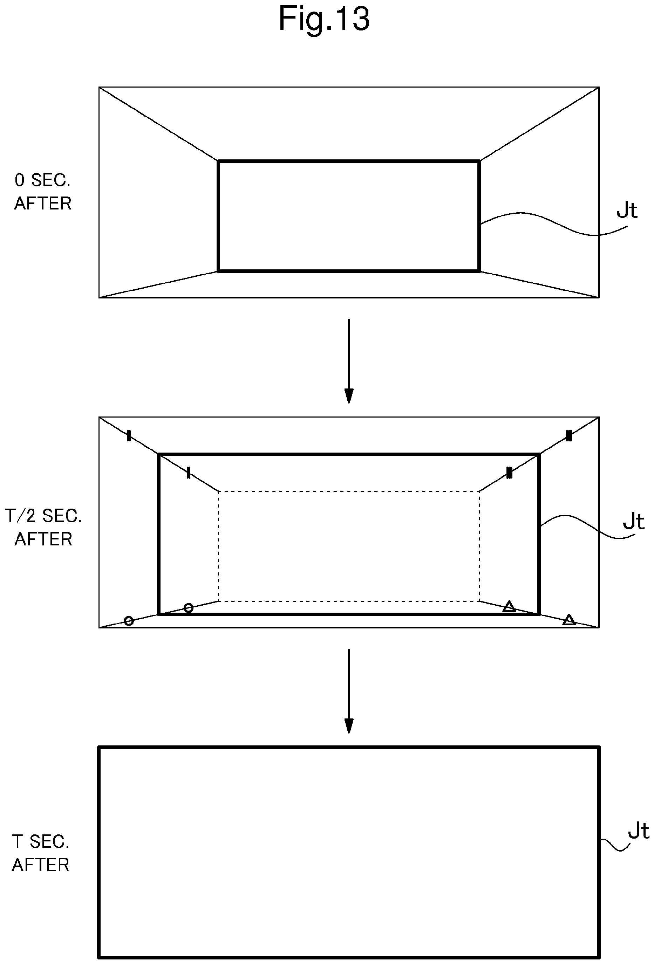

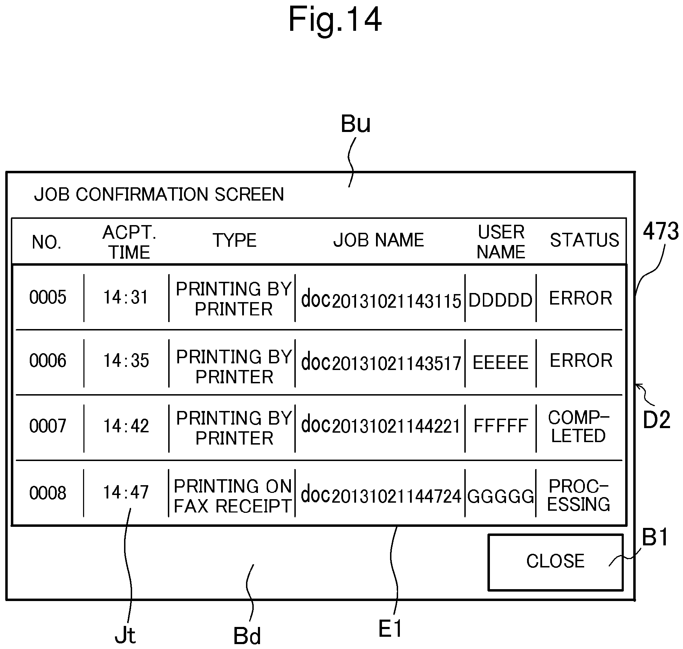

Thereafter, the display control section 103 allows the display section 473 to provide an animation display in which, as shown in Fig. 12, the top portion Jt of the job list J2 is gradually enlarged with time (Fig. 12 shows a display state 0 seconds after, a display state T/2 seconds after, and a display state T seconds after) (S38). Fig. 13 is an explanatory view for illustrating an animation display in which the top portion Jt is gradually enlarged. The thick frame in Fig. 13 represents the top portion Jt and Fig. 13 shows how the display control section 103 enlarges the top portion Jt at a constant speed. Although shown here is the case where the top portion Jt is enlarged at a constant speed, the enlargement speed may not necessarily be constant and the display control section 103 may provide an animation display to gradually increase or decrease the speed. In this manner, as shown in Fig. 14, the display control section 103 allows the display section 473 to display a display screen D2 in which the top portion Jt is placed on the display area E1 (S39). The characters in Fig. 11 should have been same in at least some parts of Fig. 12. Because of the size of some parts of Fig. 12 being relatively smaller, the characters would have become too small and been unable to comply with the rules. For this reason, black dots are used in Fig. 12 to replace the characters and are meant to show simply an arrangement of the characters on the display.

If in S33 the display control section 103 determines that the display screen created by the control section 100 in S32 contains no scroll image (NO in S33), the display control section 103 allows the display section 473 to display a display screen D1 (see Fig. 3) made up by including, for example, the job list J1 (an image having a size fully displayable within the display area E1 without any scrolling display), the top bar Bu, and the bottom bar Bd (S40).

In this relation, in a general display device, an image to be displayed is first scrolled up until its end position is displayed, resulting in a state where the bottom end of the scrollable image is displayed. Therefore, in order that the user confirms the contents of the image from a desired position thereof, such as the front position, and performs a desired operation, it is necessary to make an additional gesture for instructing to scroll down the image so that the front position of the image is displayed on a display screen of the display section, which makes it troublesome for the user to operate the display device.

In contrast, according to the third embodiment, in allowing the display section 473 to display a scroll image the whole area of which cannot be displayed within the display area E1 without any scrolling display, prior to allowing the display section 473 to display, for example, the display screen D2 (see Fig. 14) in which a predetermined portion of the scroll image is placed on the display area E1, the display control section 103 allows the display section 473 to first display a full picture Da (see Fig. 11) containing the whole area of the scroll image, for example, the job list J2. In other words, when the image to be displayed is a scroll image displayable by scrolling on the display section 473, the display control section 103 allows the display section 473 to first display a full picture representing the whole area of the scroll image and then display the predetermined portion of the scroll image as a range displayable within the display area E1 of the display section 473.

Therefore, even if the display control section 103 allows the display section 473 to have no scroll bar or display a small scroll bar, the user can be made aware that the image being displayed on the display area E1 is a scroll image the whole area of which cannot be displayed within the display area E1 without any scrolling display. In other words, upon viewing the full picture, the user can easily recognize that the scroll image contains hidden portions not yet appearing on the display section 473.

Furthermore, since, after the full picture of the scroll image is displayed on the display section 473, only the predetermined portion of the scroll image is displayed on the display section 473 without any user's operation, there is no inconvenience, such as the full picture remaining displayed so that details become difficult to view, and the user can immediately make a gesture or the like based on the image being displayed. According to this embodiment, since, after the full picture Da containing the whole image of the job list J2 is displayed on the display section 473, the display contents of the display section 473 are automatically switched to the display screen D2, the user can immediately set to work using the display screen D2.

Moreover, since in the third embodiment the full picture Da is displayed on the display section 473 so that the top portion Jt of the job list J2 to be displayed ahead of any other portion thereof on the display area E1 of the display screen D2 is highlighted, the top portion Jt can be brought to user's attention, so that the user can easily know in what part of the job list J2 the top portion Jt is located.

Furthermore, since in the third embodiment the contents displayed on the display section 473 are switched from the full picture Da to the display screen D2 by an animation display in which the top portion Jt is gradually enlarged, the top portion Jt can be more effectively brought to user's attention.

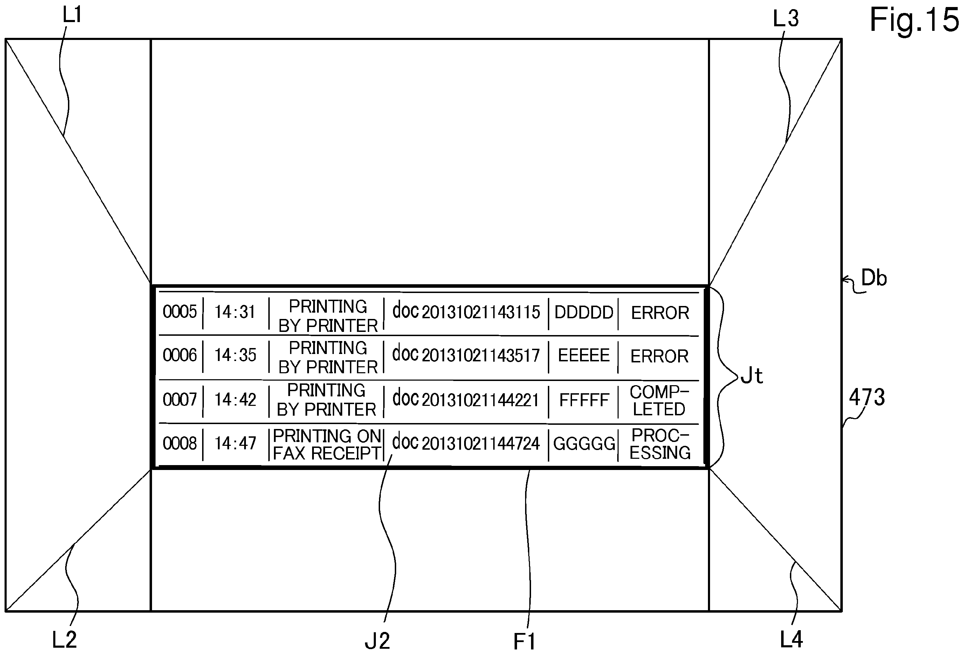

The description in the third embodiment has been given of the case where, as shown in Fig. 11, the full picture Da in which the whole of the job list J2 serving as the scroll image is contained as it is is displayed on the display section 473. However, in another embodiment, in allowing the display section 473 to display the whole area of the scroll image, as shown in Fig. 15, the display control section 103 may allow the display section 473 to display a full picture Db of the job list J2, i.e., the scroll image, in which the portions of the job list J2 other than the top portion Jt are simplified (for example, undisplayed). Thus, the top portion Jt can be more effectively highlighted, which can even more effectively bring the top portion Jt to user's attention.

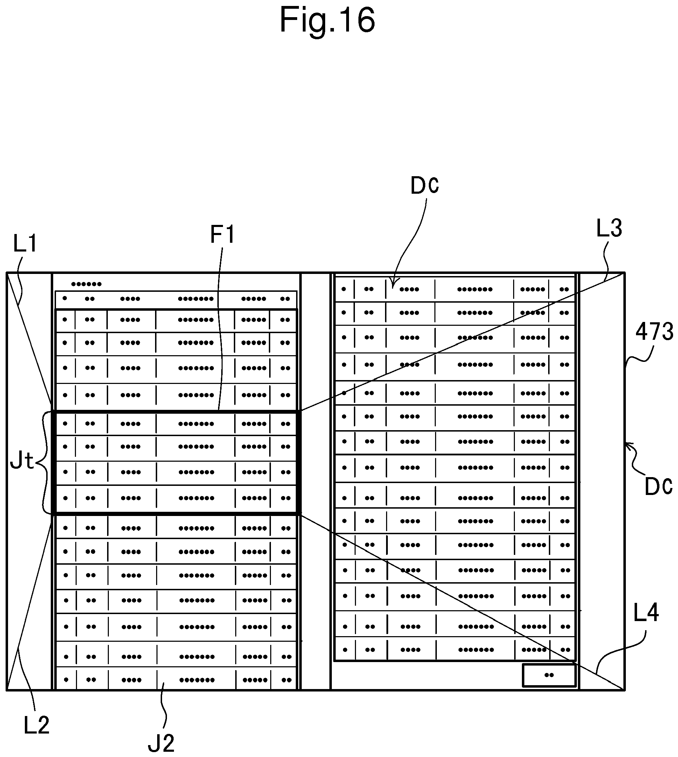

In the third embodiment, as shown in Fig. 11, the display control section 103 allows the display section 473 to display the full picture Da in which the job list J2 serving as the scroll image is shown in a single row. In still another embodiment, when the number of pieces of job information constituting the job list J2 is larger than a predetermined value, as shown in Fig. 16, the display control section 103 may allow the display section 473 to display a full picture Dc in which the job list J2 is divided into two or more rows of images and the rows of images are arranged next to each other. For example, the display control section 103 may set the arrangement of the full picture so that the number of rows constituting the full picture is single for a job list composed of 1 to 15 pieces of job information, two for a job list composed of 16 to 30 pieces of job information, and three for a job list composed of 31 or more pieces of job information. The characters in Fig. 11 should have been same in at least some parts of Fig. 16. Because of the size of some parts of Fig. 16 being relatively smaller, the characters would have become too small and been unable to comply with the rules. For this reason, black dots are used in Fig. 16 to replace the characters and are meant to show simply an arrangement of the characters on the display.

Next, a description will be given of a display device according to a fourth embodiment. The fourth embodiment is different from the first to third embodiments in that an electronic apparatus is used as one embodiment of the display device. Furthermore, in the fourth embodiment, a control unit allows a display section to display, on a display area of the display section, a central portion of a scroll image as the predetermined portion of the scroll image, then provide a scrolling display of the scroll image until a portion of the scroll image containing a predetermined default display position forming a corner of the scroll image is displayed on the display area, and stop the scrolling display in a state where the portion of the scroll image containing the default display position is displayed on the display area.

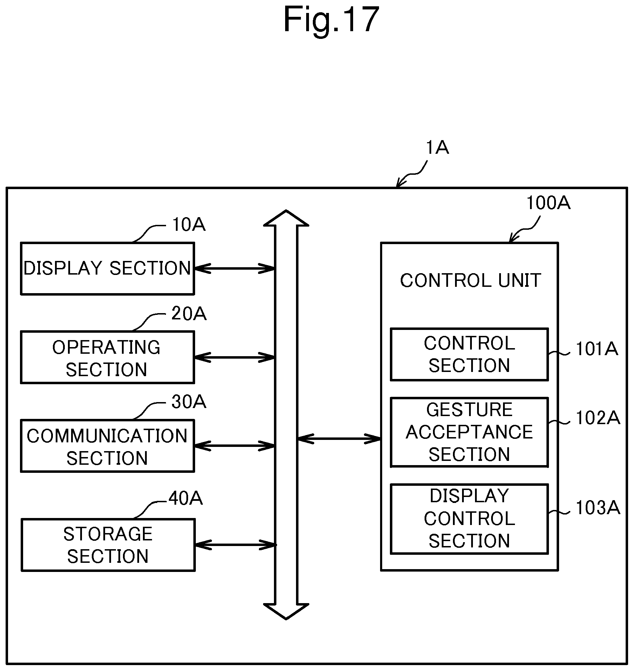

Fig. 17 is a functional block diagram schematically showing an essential internal configuration of the display device according to the fourth embodiment of the present invention. The display device 1A is, for example, an electronic apparatus, such as a PC, and includes a display section 10A, an operating section 20A, a communication section 30A, a storage section 40A, and a control unit 100A. These components can transfer data or signals to and from one another via a CPU (Central Processing Unit) bus.

The operating section 20A is formed of a mouse, a keyboard, and so on and accepts user's instructions for various types of operations and processing executable by the display device 1A.

The display section 10A is formed of an LCD (Liquid Crystal Display), an OLED (Organic Light-Emitting Diode) or the like. The display section 10A has a touch panel function, detects through the touch panel operator's touch gestures on buttons and keys displayed on a screen, and outputs detection signals indicating the detected gestures to a gesture acceptance section 102A to be described hereinafter.

The communication section 30A is a communication interface including an unshown communication module, such as a LAN (Local Area Network) chip.

The storage section 40A is a storage device, such as a non-volatile memory or an HDD (Hard Disk Drive).

The control unit 100A is made up by including a processor, a RAM (Random Access Memory), a ROM (Read Only Memory), and a dedicated hardware circuit. The processor is, for example, a CPU (Central Processing Unit), an MPU or an ASIC. The control unit 100A includes a control section 101A, a gesture acceptance section 102A, and a display control section 103A.

The control unit 100A functions as the control section 101A, the gesture acceptance section 102A, and the display control section 103A by operating in accordance with a display control program stored in the storage section 40A. However, each of the control section 101A, the gesture acceptance section 102A, and the display control section 103A may not be implemented by the operation of the control unit 100A in accordance with the display control program but may be constituted by a hardware circuit. Hereinafter, the same applies to the other embodiments unless otherwise stated.

The control section 101A governs the overall operation control of the display device 1A. The control section 101A is connected to the display section 10A, the operating section 20A, the communication section 30A, and the storage section 40A and performs operation control of the connected sections and signal or data transfer from and to the sections.

The gesture acceptance section 102A identifies a user's gesture entered by a user, based on a detection signal output from the operating section 20A (such as a touch panel). Then, the gesture acceptance section 102A accepts an instruction indicated by the identified user's gesture and outputs a control signal corresponding to the instruction to the display control section 101A and so on.

The display control section 103A performs the display control for the display section 10A. For example, when the gesture acceptance section 102A accepts a user's instruction to scroll the display contents of the display section 10A based on a flick, swipe or like gesture through the touch panel function, the display control section 103A allows the display section 10A to scroll the display in response to the user's request.

Furthermore, when the gesture acceptance section 102A accepts a user's request to access a site on the Internet through a browser function, the display control section 103A acquires image data constituting a Web page from the site through the communication section 30A and allows the display section 10A to display a browser screen of the Web page.

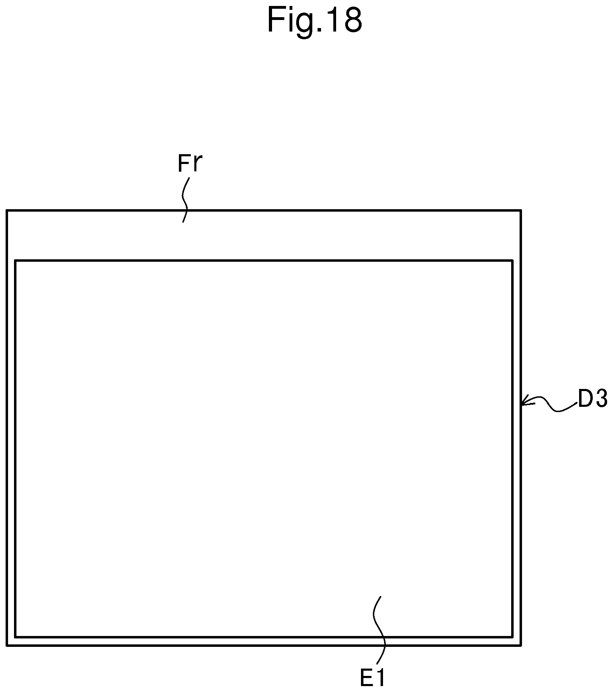

Fig. 18 is a view showing an example of a browser screen displayed on the display section 10A. The browser screen D3 is made up by including a display area E1 for displaying a Web page and a frame Fr surrounding the display area E1.

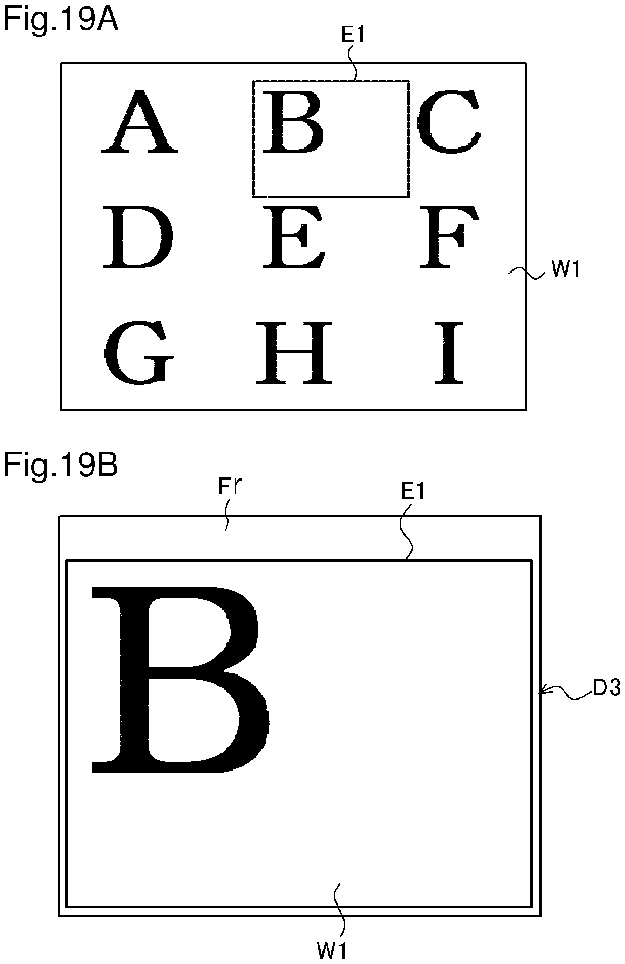

Furthermore, when, as shown in Fig. 19A, a Web page W1 is formed of a large image beyond the display area E1, the display control section 103A causes a portion of the Web page W1 to be displayed on the display area E1 as shown in Fig. 19B. In this case, the display control section 103A causes the images of all portions in the entire region of the Web page W1 to be displayed one after another on the display area E1 by scrolling the image being displayed on the display area E1 (a portion of the Web page W1).

In this embodiment, an image that the display control section 103A allows the display section 10A to display as a target to be displayed by scrolling is referred to as a scroll image. In other words, the scroll image refers to an image the whole area of which cannot be displayed in a single display within the display area of the display section 10A and can be displayed on the display area only by scrolling display. The Web page W1 is an example of a scroll image.

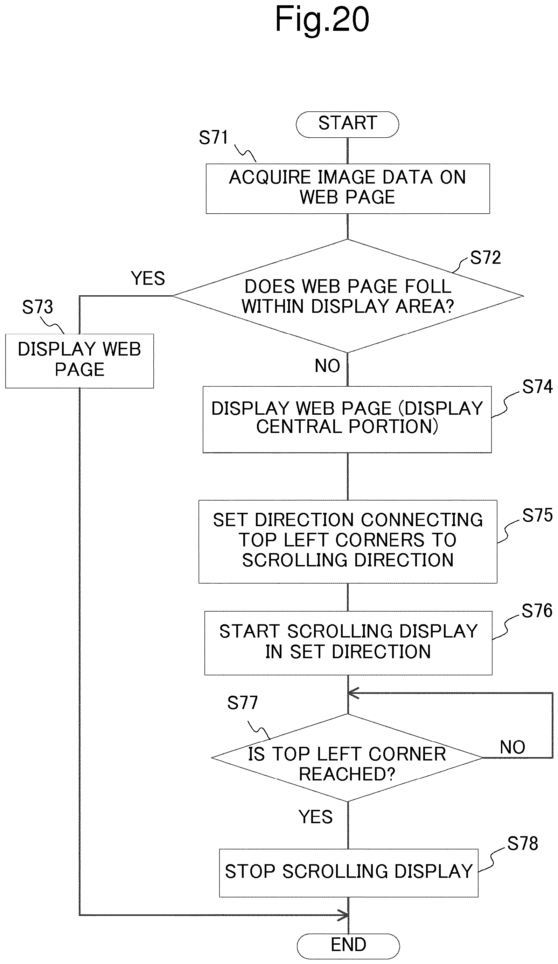

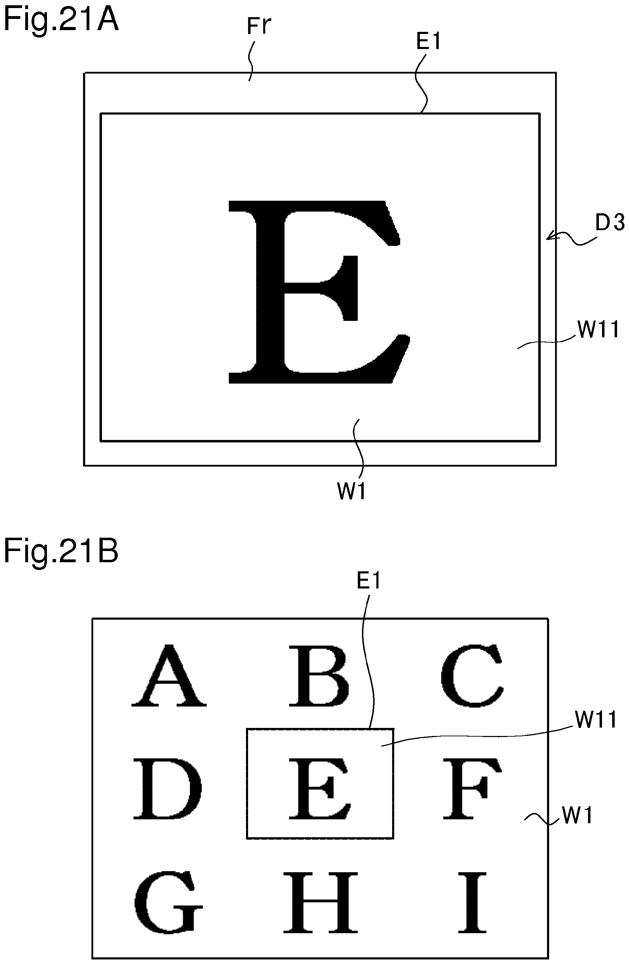

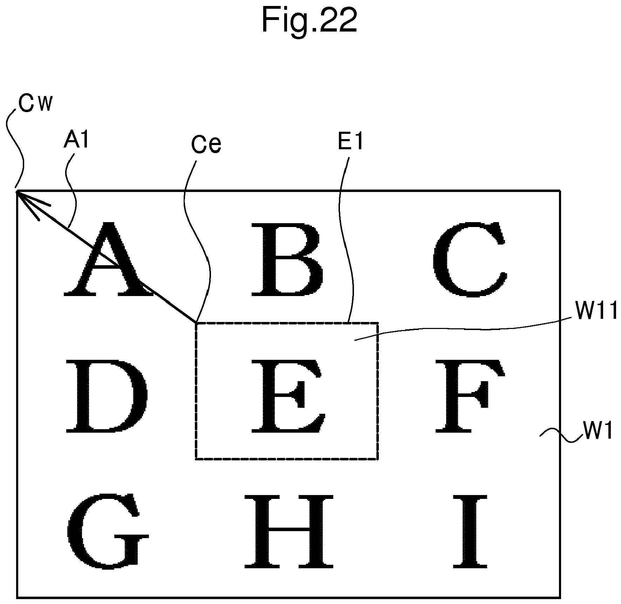

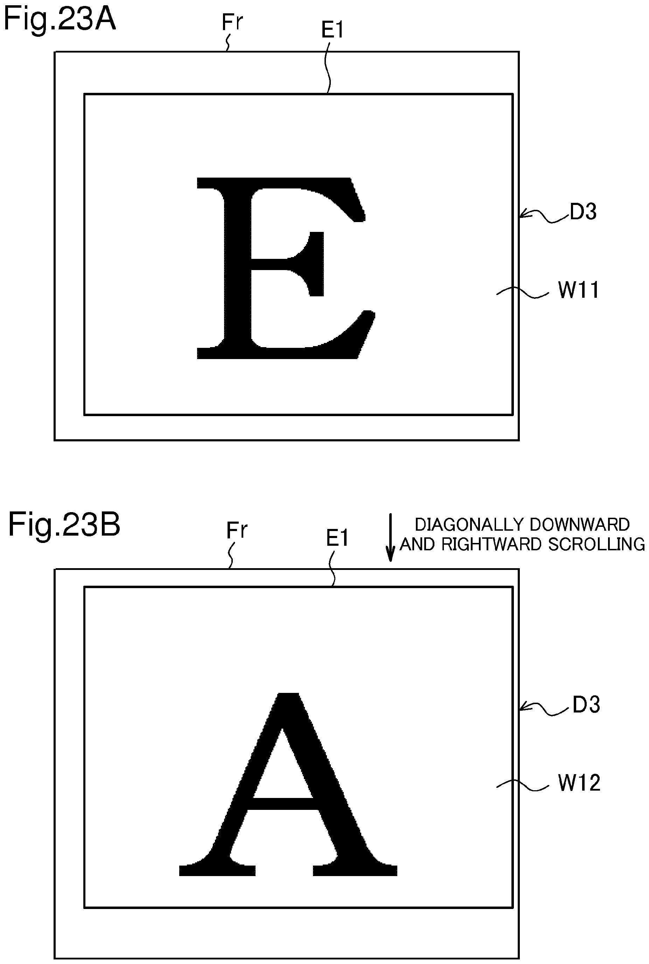

Next, a description will be given of operation of the display device 1A having the above configuration. Fig. 20 is a flowchart showing processing during display control by the display device according to the fourth embodiment. Fig. 21A is a view showing an example of the browser screen D3 displayed on the display section 10A and Fig. 21B is a view showing a positional relation between the Web page W1 and the display area E1. Fig. 22 is a view showing the positional relation between the Web page W1 and the display area E1. Fig. 23 shows an example of the browser screen D3 displayed on the display section 10A, wherein Fig. 23A shows a state at the start of a scrolling display and Fig. 23 B shows a state at the end of the scrolling display.

For example, when the gesture acceptance section 102A accepts a user's request to access a site on the Internet, the display control section 103A acquires image data constituting a Web page from the site through the communication section 30A (S71). Furthermore, the display control section 103A determines whether or not the Web page consisting of the acquired image data falls within the display area E1 (see Fig. 18) (S72). In other words, the display control section 103A determines whether or not the image of the Web page is a scroll image.

If determining that the Web page falls within the display area E1 (the Web page is not composed of a scroll image) (YES in S72), the display control section 103A allows the display section 10A to display, based on the acquired image data, a browser screen in which the overall Web page is placed within the display area E1 (S73).

On the other hand, if determining that the Web page is beyond the display area E1 (the Web page is composed of a scroll image) (NO in S72), as shown in Fig. 21B, the display control section 103A allows the display section 10A to display a browser screen D3 in which an image W11 representing a central portion of the Web page (scroll image) is placed on the display area E1 (S74, see Fig. 21 A).

Subsequently, the display control section 103A calculates the direction from a predetermined position of the image W11 being displayed on the display area E1 in Fig. 21 B toward a predetermined default display position forming a corner of an image representing the Web page W1 and sets the calculated direction A1 to a scrolling direction (S75). For example, as shown in Fig. 22, when the top left corner Ce of the image W11 displayed on the display area E1 is designated as the predetermined position and the top left corner Cw of the Web page W1 is designated as the default display position, the display control section 103A calculates the direction A1 from the top left corner Ce of the image W11 toward the top left corner Cw of the Web page W1 and sets the direction A1 to the scrolling direction.

Next, the display control section 103A starts a scrolling display of the Web page W1 so that the Web page W1 is shown as being scrolled in the direction A1 (diagonally up and left in the example shown in Fig. 22) (S76). When providing the scrolling display until the top left corner Cw of the Web page W1 reaches the top left corner Ce of the display area E1 (YES in S77), the display control section 103 stops the scrolling display (S78). In terms of this example, the display control section 103A provides a scrolling display from a state where the image W11 is displayed on the display area E1 (see Fig. 23 A) to a state where an image W12 containing the top left corner Cw is displayed thereon, and then stops the scrolling display with the image W12 displayed on the display area E1.

In this relation, if, when a Web page is opened using a browser function on an electronic apparatus, such as a PC (Personal Computer), the scroll bar is absent or small, the user may be unware of the presence of any image portion not being displayed on the display section but displayable by scrolling. Furthermore, as for an image having a portion displayable by upward scrolling in a single direction, a general display device can make the user aware of the presence of an image portion displayable by scrolling. However, as for an image having portions displayable by scrolling in two directions, such as vertical and horizontal directions, the general display device cannot make the user properly aware of the presence of image portions made displayable by scrolling in the two directions.

In contrast, according to the fourth embodiment, if the whole area of a Web page W1 cannot be displayed within the display area E1, an image of a central portion of the Web page W1 is first displayed on the display area E1 and the Web page W1 is then scrolled to an image portion thereof containing a default display position. Therefore, the user can be made more properly aware of the presence of any image portion of the Web page W1 not yet displayed within the display area E1 than ever before.

Furthermore, the image of the central portion of the Web page W1 is displayed on the display area E1 at the start of the scrolling display and the scrolling display is provided from this display state until a state where the image portion of the Web page W1 containing the default display position forming a corner thereof is displayed. Therefore, the user can know the entire size and amount of information of the Web page W1 based on the amount of scrolling during the scrolling display.

Next, a description will be given of a display device 1 according to a fifth embodiment. Although in the fourth embodiment the display control section 103A provides a scrolling display in a direction from a predetermined position of an image W11 being displayed on the display area E1 in Fig. 21B toward a predetermined default display position forming a corner of an image representing a Web page W1, the scrolling display in the fifth embodiment is provided by dividing the scrolling direction into predetermined two directions. Specifically, the fifth embodiment is different from the fourth embodiment in that the scrolling of the Web page W1 is provided by dividing the scrolling in the scrolling direction set in the fourth embodiment into, for example, a scrolling in a Y direction (e.g., vertical scrolling) and a scrolling in an X direction (e.g., horizontal scrolling).

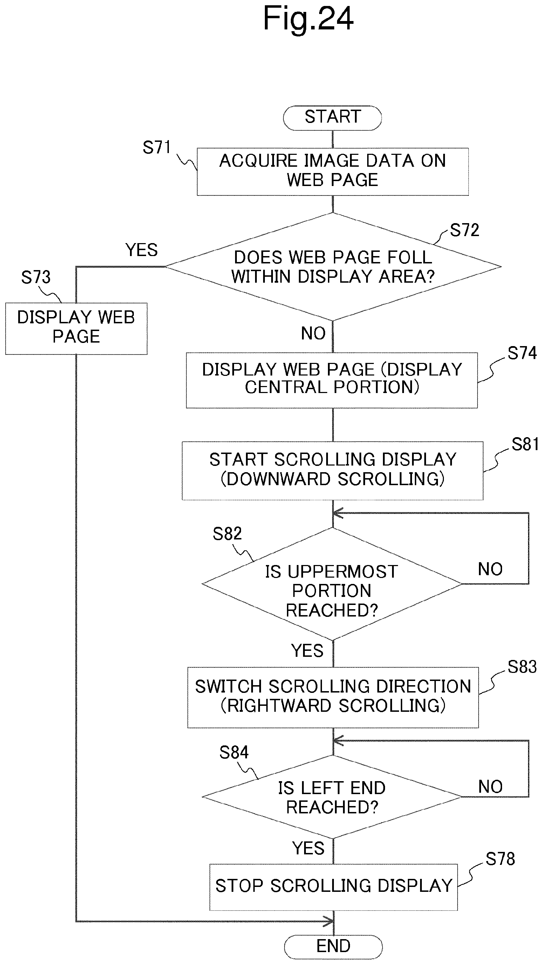

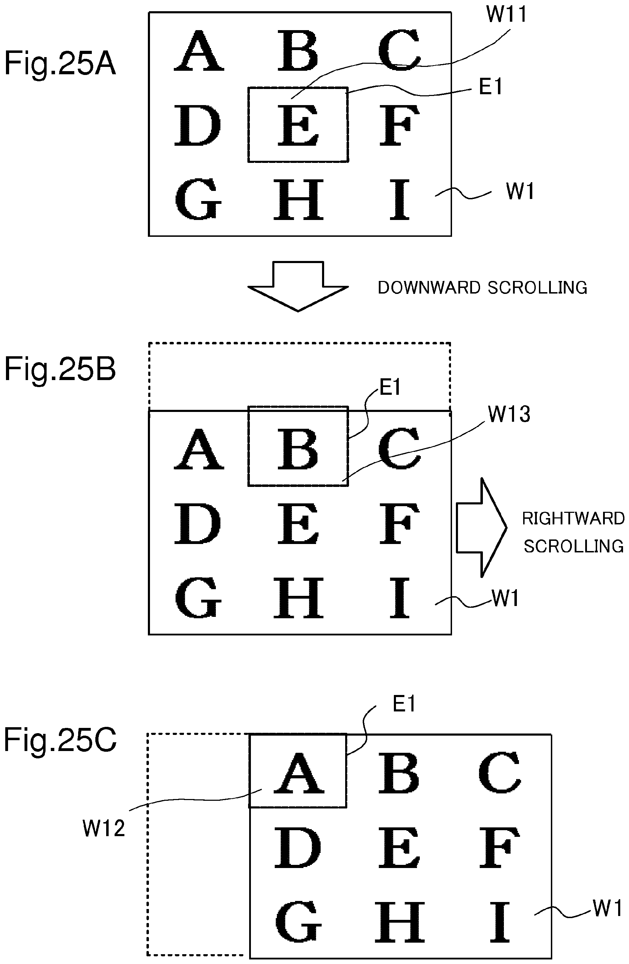

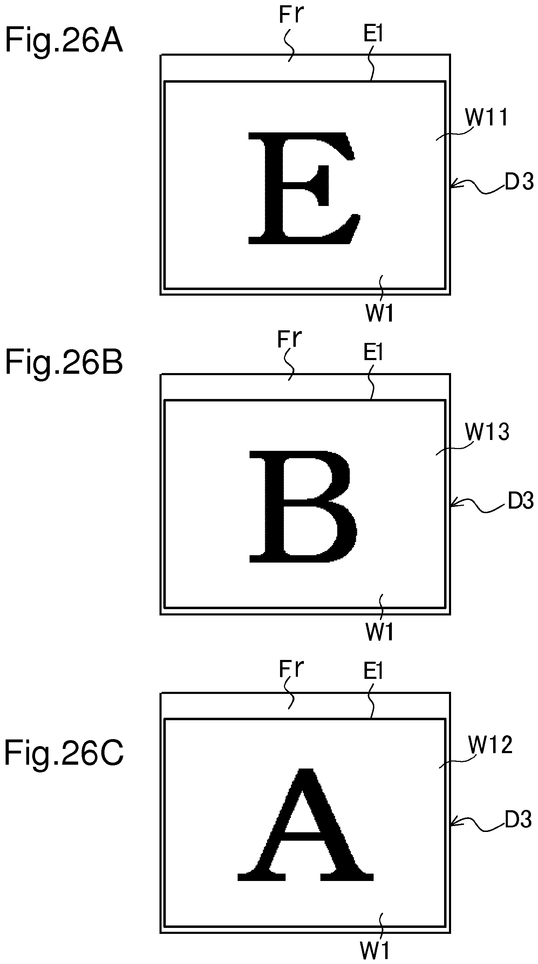

A description will be given below of processing during display control by the display device 1 according to the fifth embodiment. Fig. 24 is a flowchart showing the processing during display control by the display device 1 according to the fifth embodiment. However, further explanation of the same steps of processing as those in the fourth embodiment will be omitted. Figs. 25A to 25C and Figs. 26A to 26C are explanatory views for illustrating a scrolling display. Figs. 25A to 25C show a positional relation between the Web page W1 and the display area E1 and Figs. 26A to 26C show examples of a browser screen D3 displayed on the display section 10A.

As shown in Fig. 25A, the display control section 103A allows the display section 10A to display a browser screen D3 (see Fig. 26 A) in which an image W11 forming a central portion of the Web page W1 is placed on the display area E1 (S74). Subsequently, the display control section 103A divides the scrolling direction calculated in the same manner as in the fourth embodiment into two directions and first provides a scrolling in the Y direction (in this example, a downward scrolling that makes an image look like it is moving upward) (S81).

The display control section 103A scrolls down the Web page W1, for example, until, as shown in Fig. 25B, the uppermost portion of the Web page W1 reaches the top end of the display area E1 and an image W13 containing the top end is thus displayed on the display area E1 (see Fig. 26 B) (YES in S82). Thereafter, the display control section 103A switches the scrolling direction to, for example, the right and provides a rightward scrolling for displaying an image W12 containing the top left corner Cw (default display position) of the Web page W1 (S83).

The display control section 103A scrolls the Web page W1 to the right until the left end of the Web page W1 reaches the left end of the display area E1 (YES in S84) and stops the scrolling display in a state where the image W12 containing the top left corner Cw (default display position) of the Web page W1 is displayed on the display area E1 (see Fig. 26 C) (S78).

According to the fifth embodiment, unlike the fourth embodiment, a scrolling display is provided by dividing the scrolling direction into predetermined two directions, for example, vertical and horizontal directions. Therefore, the user can more easily know the whole area of the Web page W1 by viewing the scrolling display into the two directions.

Next, a description will be given of a display device according to a sixth embodiment. The sixth embodiment is different from the fifth embodiment in that a comparison is made between the amounts of scrolling in the two divided directions and the direction of scrolling to be first started is selected based on the comparison result.

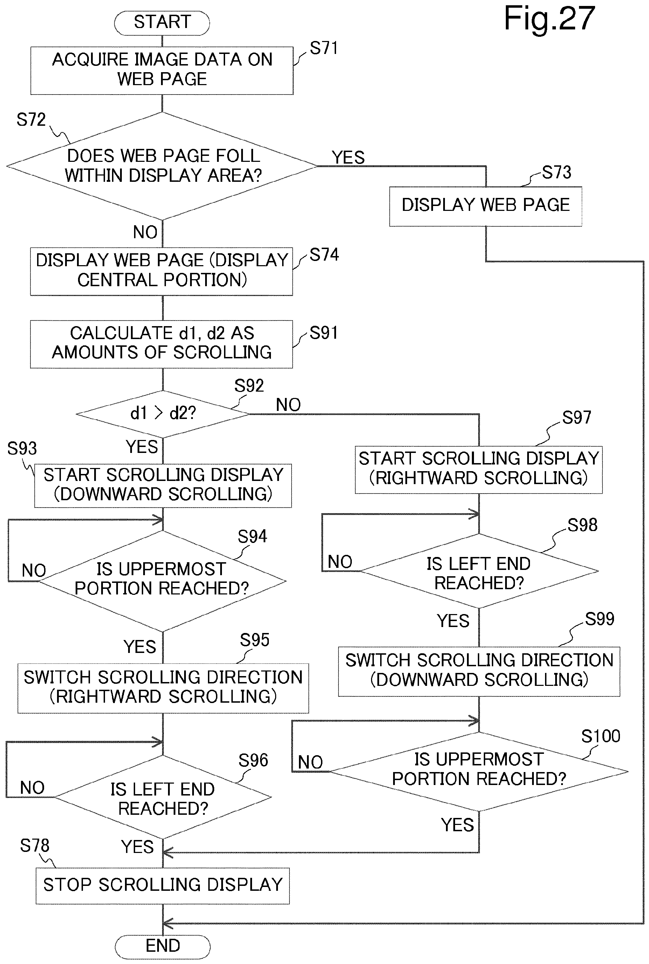

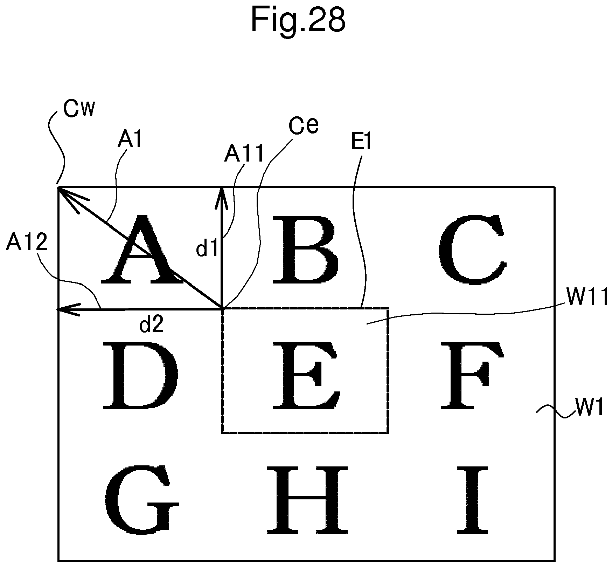

A description will be given below of operation of the display device 1 according to the sixth embodiment with reference to a flowchart shown in Fig. 27. However, further explanation of the same steps of processing as those in the fourth or fifth embodiment will be omitted. Furthermore, Fig. 28 is a view showing a positional relation between a Web page and a display area and a view showing how a scrolling direction is divided into two directions.

As shown in Fig. 25A, the display control section 103A allows the display section 10A to display a browser screen D3 (see Fig. 26 A) in which an image W11 forming a central portion of the Web page W1 is placed on the display area E1 (S74). Subsequently, as shown as an example in Fig. 28, the display control section 103A divides the scrolling direction calculated in the same manner as in the fourth embodiment into two directions A11 (a y component) and A12 (an x component) and calculates the respective distances d1 and d2 as the respective amounts of scrolling in the two directions (S91). In the sixth embodiment, the amount of downward scrolling (in the direction A11) is defined as the distance d1 and the amount of rightward scrolling (in the direction A12) is defined as the distance d2.

Then, the display control section 103A determines whether or not the distance d1 is larger than the distance d2 (S92) and starts a scrolling display first in the direction in which the amount of scrolling is larger. Specifically, if determining that the distance d1 is larger than the distance d2 (YES in S92), the display control section 103A first provides a downward scrolling (S93, S94), then provides a rightward scrolling (S95, S96), and stops the scrolling display in a state where the image W12 containing the top left corner Cw (default display position) of the Web page W1 is displayed on the display area E1 (S78).

On the other hand, if determining that the distance d1 is not larger than the distance d2 (NO in S92), the display control section 103A first provides a rightward scrolling (S97, S98), then provides a downward scrolling (S99, S100), and stops the scrolling display in a state where the image W12 is displayed on the display area E1 (S78).

According to the sixth embodiment, there is a rule that if the whole area of the Web page W1 cannot be displayed in a single display within the display area E1, a scrolling display is started first in the direction in which there is a larger amount of image portion not yet displayed on the display area E1. Therefore, if the user knows this rule, the user can find in which of the two directions, for example, the vertical and horizontal directions, of the display area E1 a larger amount of information on the Web page W1 is hidden. Although in the sixth embodiment a scrolling display in the direction in which the amount of scrolling is larger is first started, this is merely an example and a scrolling display in the direction in which the amount of scrolling is smaller may be first started.

Furthermore, in another embodiment, the display control section 103A may provide each of the scrolling displays in the two directions so that as the amount of scrolling in each of the two direction increases (each of the distances d1, d2 increases), the scrolling speed increases. For example, a standard scrolling display time T is previously set and the scrolling speeds V1 and V2 in the two directions are calculated based on the following formulas: (scrolling speed V1)=d1/T and (scrolling speed V2)=d2/T, respectively. Thus, regardless of the distances d1 and d2, the time taken to provide each of the scrolling displays in the two directions can be made constant.

The present invention is not limited to the configurations of the above embodiments and can be modified in various ways. For example, although the description in the first to third embodiments has been given with reference to an image forming apparatus as one embodiment of the display device according to the present invention and the description in the fourth to sixth embodiments has been given with reference to an electronic apparatus as one embodiment of the display device according to the present invention, these apparatuses are merely illustrative and the display device according to the present invention may be other devices or apparatuses, including a mobile device, a medical device, a ticket-vending machine, and a reservation system, each including a display section.

The structures and processing described in the above embodiments with reference to FIGS. 1 to 28 are merely illustrative of the present invention and the present invention is not intended to be limited to the above structures and processing.

## Claims

1. A display device comprising:
a display section (473, 10A) capable of displaying an image;
a gesture acceptance section (101, 102A) that accepts a user's gesture; and
a display control section (103, 103A) that performs a display control of the display section (473, 10A) and allows the display section (473, 10A), when the gesture acceptance section (101, 102A) accepts a user's instruction to provide a scrolling display of display contents of the display section (473, 10A), to provide a scrolling display of the display contents of the display section (473, 10A) in accordance with the instruction,
wherein when the image to be displayed is a scroll image displayable by scrolling on the display section (473, 10A), the display control section (103, 103A) allows the display section (473, 10A) to display, on a display area of the display section (473, 10A), a predetermined portion of the scroll image as a range displayable within the display area.

2. The display device according to claim 1, wherein the display control section (103) allows the display section (473) to display the predetermined portion of the scroll image ahead of any other portion thereof, then provide a scrolling display of the scroll image by a predetermined amount in both directions or a single direction in which the scrolling display is possible, then return to a state where the predetermined portion of the scroll image is displayed, and stop the scrolling display.

3. The display device according to claim 2,
further comprising a display position information storage section (104) that stores display position information indicating the predetermined portion of the scroll image recently displayed on the display area of the display section (473),
wherein the display control section (103) causes the portion of the scroll image indicated by the display position information stored in the display position information storage section (104) to be displayed ahead of any other portion thereof on the display area and then provides a scrolling display of the scroll image in both the directions or the single direction from a state where the portion of the scroll image indicated by the display position information is displayed.

4. The display device according to claim 3, wherein if the display position information on the scroll image is absent in the display position information storage section (104), the display control section (103) provides, with a front position of the scroll image placed at a top end of the display area, the scrolling display of the scroll image in both the directions or the single direction.

5. The display device according to claim 3, wherein, at the start of the scrolling display of the scroll image in both the directions or the single direction, the display control section (103) sets an amount of scrolling in both the directions or the single direction based on an amount of information from the portion of the scroll image displayed ahead of any other portion thereof on the display area to a front position or an end position of the scroll image and provides the scrolling display of the scroll image in both the directions or the single direction at the set amount of scrolling.

6. The display device according to any one of claims 2 to 5, wherein when the portion of the scroll image displayed ahead of any other portion thereof on the display area is free of not only an image forming the front position of the scroll image but also an image forming the end position of the scroll image, the display control section (103) provides the scrolling display of the scroll image in both the directions from a state where the portion of the scroll image displayed ahead of any other portion thereof is displayed.

7. The display device according to claim 1, wherein the display control section (103) allows the display section (473) to first display a full picture representing a whole area of the scroll image and then display the predetermined portion of the scroll image.

8. The display device according to claim 7, wherein, in displaying the full picture, the display control section (103) allows the display section (473) to display the predetermined portion of the scroll image to be displayed ahead of any other portion thereof on the display area, in a manner different from remaining portions of the scroll image.

9. The display device according to claim 7 or 8, wherein the display control section (103) allows the display section (473) to first display the full picture and then display, as the range displayable within the display area, the predetermined portion of the scroll image to be displayed ahead of any other portion thereof in the full picture by gradually enlarging the predetermined portion of the scroll image.

10. The display device according to any one of claims 7 to 9,
further comprising a display position information storage section (104) that stores display position information indicating the predetermined portion of the scroll image recently displayed on the display area of the display section (473),
wherein the display control section (103) allows the display section (473) to display the portion of the scroll image indicated by the display position information stored in the display position information storage section (104), as the predetermined portion of the scroll image to be displayed ahead of any other portion thereof on the display area.

11. The display device according to any one of claims 7 to 10, wherein when the scroll image contains an image representing a predetermined number or more of pieces of information, the display control section (103) allows the display section (473) to display the full picture in which the scroll image is divided into a plurality of number of rows of images and the rows of images are arranged next to each other within the display area.

12. The display device according to any one of claims 7 to 11, wherein, in allowing the display section (473) to display the full picture, the display control section (103) allows the display section (473) to provides a simplified display of the scroll image except for the predetermined portion of the scroll image to be displayed ahead of any other portion thereof on the display area.

13. The display device according to claim 1, wherein the display control section (103A) allows the display section (10A) to first display a central portion of the scroll image as the predetermined portion of the scroll image on the display area of the display section (10A), then provide a scrolling display of the scroll image until a portion of the scroll image containing a predetermined default display position forming a corner of the scroll image is displayed on the display area, and stop the scrolling display in a state where the portion of the scroll image containing the default display position is displayed on the display area.

14. The display device according to claim 13, wherein the display control section (103A) provides the scrolling display linearly from the central portion of the scroll image toward the portion of the scroll image containing the default display position.

15. The display device according to claim 13, wherein the display control section (103A) provides the scrolling display from the central portion of the scroll image toward the portion of the scroll image containing the default display position by dividing a direction of scrolling of the scrolling display into predetermined two directions.

16. The display device according to claim 15, wherein the display control section (103A) compares amounts of scrolling in the two directions and starts the scrolling display first in the direction in which the amount of scrolling is larger.

17. The display device according to claim 15 or 16, wherein the display control section (103A) sets a scrolling speed according to each of the amounts of scrolling in the two direction so that the scrolling speed increases as the amount of scrolling increases.

18. A display control program allowing a computer to function as:
a gesture acceptance section (101) that accepts a user's gesture; and
a display control section (103) that controls operation of a display section (473) and allows the display section (473), when the gesture acceptance section (101) accepts a user's instruction to provide a scrolling display of display contents of the display section (473), to provide a scrolling display of the display contents of the display section (473) in accordance with the instruction,
wherein when the image to be displayed is a scroll image displayable by scrolling on the display section (473), the display control program further allows the computer to function so that the display control section (103) allows the display section (473) to first display, on a display area of the display section (473), a predetermined portion of the scroll image as a range displayable within the display area, then provide a scrolling display of the scroll image by a predetermined amount in both directions or a single direction in which the scrolling display is possible, then return to a state where the predetermined portion of the scroll image is displayed on the display area, and stop the scrolling display.

19. A display control program allowing a computer to function as:
a gesture acceptance section (101) that accepts a user's gesture; and
a display control section (103) that controls operation of a display section (473) and allows the display section (473), when the gesture acceptance section (101) accepts a user's instruction to provide a scrolling display of display contents of the display section (473), to provide a scrolling display of the display contents of the display section (473) in accordance with the instruction,
wherein when the image to be displayed is a scroll image displayable by scrolling on the display section (473), the display control program further allows the computer to function so that the display control section (103) allows the display section (473) to first display a full picture representing a whole area of the scroll image and then display a predetermined portion of the scroll image as a range displayable within a display area of the display section (473).

20. A display control program allowing a computer to function as:
a gesture acceptance section (102A) that accepts a user's gesture; and
a display control section (103A) that controls operation of a display section (10A) and allows the display section (10A), when the gesture acceptance section (102A) accepts a user's instruction to provide a scrolling display of display contents of the display section (10A), to provide a scrolling display of the display contents of the display section (10A) in accordance with the instruction,
wherein when the image to be displayed is a scroll image displayable by scrolling on the display section (10A), the display control program further allows the computer to function so that the display control section (103A) allows the display section (10A) to first display a central portion of the scroll image on a display area of the display section (10A), then provide a scrolling display of the scroll image until a portion of the scroll image containing a predetermined default display position forming a corner of the scroll image is displayed on the display area, and stop the scrolling display in a state where the portion of the scroll image containing the default display position is displayed on the display area.
